(19) Europäisches Patentamt
European Patent Office
Office européen des brevets

(11) Veröffentlichungsnummer: **0 005 868**
**B1**

(12) # EUROPÄISCHE PATENTSCHRIFT

(45) Veröffentlichungstag der Patentschrift: **18.07.84**

(51) Int. Cl.³: **C 09 D 3/58,** C 09 D 3/64, C 09 J 3/16, C 08 G 63/20

(21) Anmeldenummer: **79200129.9**

(22) Anmeldetag: **16.03.79**

(54) **Wasserlösliche reaktive Bindemittel, Verfahren zu deren Herstellung und deren Verwendung zur Herstellung von Überzugsschichten oder Klebstoffen.**

(30) Priorität: **18.03.78 DE 2811913**
**01.12.78 DE 2851962**

(43) Veröffentlichungstag der Anmeldung:
**12.12.79 Patentblatt 79/25**

(45) Bekanntmachung des Hinweises auf die Patenterteilung:
**18.07.84 Patentblatt 84/29**

(84) Benannte Vertragsstaaten:
**BE CH DE FR GB IT NL SE**

(56) Entgegenhaltungen:
**FR - A - 2 261 323**
**FR - A - 2 381 087**
**US - A - 3 397 254**

(73) Patentinhaber: **HOECHST AKTIENGESELLSCHAFT,**
**Postfach 80 03 20, D-6230 Frankfurt am Main 80 (DE)**

(72) Erfinder: **Kraft, Kurt, Im Hopfengarten 16,**
**D-6200 Wiesbaden (DE)**
Erfinder: **Walz, Gerd, Dr., Pfingstbornstrasse 99,**
**D-6200 Wiesbaden (DE)**
Erfinder: **Wirth, Thaddäus, Dr., Kemeler Weg 6,**
**D-6209 Heidenrod 16 (DE)**
Erfinder: **Theiling, Ernst-August, Dr., Ubier-Strasse 8,**
**D-6238 Hofheim/Ts. (DE)**

**EP 0 005 868 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Es ist bekannt, daß wäßrige Glanzdispersionen eine Reihe von Mängeln aufweisen, z. B. Glanzverlust bei einem Pigmentanteil von mindestens 50 Gew.-%. Hochglanz ist dann nicht erreichbar, der Verlauf ist mangelhaft und die getrockneten Filme neigen wegen der vorhandenen Thermoplastizität zum Blocken. Die Mängel im Glanz lassen sich durch Zusatz beachtlicher Mengen wasserlöslicher Lösungsmittel, wie Äthylenglykolmonoalkyl- oder -butyläther vermindern, jedoch wird durch derartige Maßnahmen die Umweltfreundlichkeit der wäßrigen Systeme geschmälert. Ein weiterer Nachteil ist die Anwesenheit beträchtlicher Mengen von Emulgatoren. Diese führen zu einer Herabsetzung der Wetter-, Wasser-, Lösemittel- und Alkalibeständigkeit der Filme. Es ist ferner bekannt, daß wäßrige Einbrenndispersionen ebenso wie wasserlösliche Kunstharze gleichfalls erhebliche Nachteile aufweisen. So neigen sie bei Schichtdicken oberhalb 30—40 μm zur Kraterbildung. Salzsprühtest (nach ASTM) und Wasserfestigkeiten sind ungenügend. Beim Beschichten senkrechter Flächen ergibt sich ein ungenügender Verlauf. In vielen Fällen werden bei wasserlöslichen Systemen Viskositätsanomalien beobachtet, die sehr störend sein können. Zudem enthalten viele dieser Systeme große Mengen organischer Lösungsmittel zur Stabilisierung. Werden derartige Systeme mit Wasser auf Verarbeitungsviskosität verdünnt, haben sie nur noch eine kurze Lebensdauer. Es kommt zu Phasentrennung, Flockung, ja sogar zur Gelbildung.

Es ist ferner bekannt, halogenierte Dicarbonsäuren bei Raumtemperatur mit epoxydierten Ölen unter Härtung umzusetzen. Dieses Verfahren hat jedoch den Nachteil, daß die Säuren nicht in genügend hoher Konzentration eingesetzt werden können, da sie aus dem System auskristallisieren.

Es sind auch Überzugsmittel auf der Basis von Alkydharzen, die mit halogenierten Dicarbonsäuren bzw. deren Anhydriden, einem epoxydierten Öl und tert. Aminen umgesetzt sind, bekannt. Durch den Halogengehalt soll die Acidität der Dicarbonsäuren bzw. der Anhydride erhöht werden, um eine Härtung bei niedrigen Temperaturen zu ermöglichen. Wegen der Anwesenheit der halogenierten Dicarbonsäurekomponente zeigen diese Systeme die oben erwähnten Nachteile, insbesondere eine ungenügende Lichtbeständigkeit.

Es ist ferner bekannt, daß die Klebfestigkeit von in Wasser dispergierten Klebstoffen, die elastomere oder acrylathaltige Bindemittel enthalten und die nach dem Auftragen auf die beiden zu verklebenden Flächen nach Verdunsten des Wassers und nach Zusammenlegen und kurzzeitigem Zusammenpressen der zu verbindenden Teile spontane Klebkräfte ausbilden, verbessert werden kann, wenn man der Klebstoffmischung geeignete, in Wasser dispergierte Harze zusetzt.

Klebstoffe dieser Art bezeichnet man allgemein als Kontaktklebstoffe.

Zur Verbesserung der Klebfestigkeit benutzte man bisher verschiedene Harze, wie Phenolformaldehyd-Harz, Kolophonium, Cumaron/Inden-, Terpen-, Cyclopentadien-Harz oder solche aus anderen ungesättigten Kohlenwasserstoffen, jeweils für sich allein oder in Kombination.

Kennzeichnend für alle diese Harze ist, daß sie vor ihrer Kombination mit einer wäßrigen Elastomer- oder Acrylatkomponente mit geeigneten Hilfsmitteln zunächst in Wasser emulgiert oder dispergiert werden müssen. Außerdem können sie nach der Herstellung der Emulsion bzw. Dispersion nicht mehr weiterreagieren und vernetzen — weder mit sich noch mit der Elastomer- oder Acrylatkomponente —, weil ihnen dazu die erforderlichen chemischen Gruppen fehlen.

Diese Nachteile sind auch der Grund dafür, daß die Steigerung der Klebfestigkeit durch die bisher verwendeten Harze — vor allem bei erhöhter Temperatur — nicht besonders groß ist. Die Wirkung dieser Harze erstreckt sich nämlich in erster Linie auf eine Steigerung der Klebrigkeit der Bindemittelkomponente. Dadurch wird während der Druckanwendung eine nur physikalische stärkere gegenseitige Verankerung der einzelnen Moleküle der Elastomer- oder Acrylatkomponente bewirkt.

Die vorliegende Erfindung überwindet die genannten Nachteile, indem sie ein wasserlösliches reaktives Bindemittel vorsieht, das gekennzeichnet ist durch eine Kombination von mindestens drei der Komponenten

a) halogenfreie cyclische Polycarbonsäureverbindungen
b) salzbildende Substanzen der Gruppe Alkali-, Erdalkali- und quartäre Ammoniumsalze, organische Basen und/oder Ammoniak sowie
c1) OH-Gruppen enthaltende Polymere, die den Rest $R^1$ bilden können, und/oder
c2) Epoxydverbindungen,

wobei die Anwesenheit der Komponente a) und b) zwingend ist und die Komponenten a) bis c2) als solche oder zumindest teilweise in chemisch gebundener Form vorliegen und, sofern die Komponenten a) und c1) in chemisch gebundener Form vorliegen, diese Form mindestens einem Reaktionsprodukt der Formel (I) oder (Ia) (siehe Anspruch 1) entspricht, worin

$R^1$ den Rest mindestens eines OH-Gruppen enthaltenden Polymeren der Gruppe Polyester, Polymerisate, beide mit einer OH-Zahl von jeweils 20 bis 300, vorzugsweise 40 bis 220, und Phenolharze mit einer OH-Zahl von 100 bis 800, vorzugsweise 150 bis 300 und/oder den Rest einer Epoxydverbindung,

$R^2$ den Rest einer mindestens vierbasischen Carbonsäure mit einer in o-Stellung zur Esterbindung befindlichen COOH-Gruppe, wobei $R^5$ auch dieselbe Bedeutung wie $R^2$ haben kann,

bedeuten, wobei die Anhydridgruppen in Formel (I) bzw. (Ia) zumindest teilweise durch COOH- und/oder Estergruppen und die COOH-Gruppen zumindest teilweise durch Estergruppen ersetzt sein können und wobei die freien COOH-Gruppen in einem Anteil von mehr als 20, jedoch bis 100% in Form eines Salzes der Komponente b) vorliegen.

Überraschenderweise hat es sich gezeigt, daß die erfindunsgemäßen Bindemittel auch ohne Halogengehalt schon bei niedrigen Temperaturen, z. B. bereits bei Raumtemperatur härten und dazu noch eine ausgezeichnete Lichtbeständigkeit aufweisen. Zweckmäßig liegt das Bindemittel in Form einer wäßrigen Lösung vor. Vorzugsweise ist die Polycarbonsäureeinheit a) zumindest teilweise mit Komponente b) umgesetzt, d. h. die Komponente a) liegt vorzugsweise in partiell oder ganz versalzter Form vor.

Das Bindemittel kann neben dem Reaktionsprodukt der Formel (I) bzw. (Ia) noch nicht umgesetzte Einheiten mindestens einer der Komponenten a) bis c2) enthalten.

Je nach dem Anteil der Komponenten a) bis c2) bzw. deren noch nicht, teilweise oder ganz erfolgter Umsetzung liegt das erfindungsgemäße Bindemittel in Form eines Ein- oder Mehrkomponenten-Systems vor, das einen Hydrosolcharakter aufweist.

Unter »cyclischen Polycarbonsäureverbindungen« sind somit Verbindungen zu verstehen, die freie Carboxyl-, Anhydrid- und Estergruppen jeweils allein oder in Kombination enthalten können. Geeignete Verbindungen leiten sich z. B. von solchen der Formeln II bis IX, XI und XIII bis XV ab. Typische Reste $R^4$ sind z. B. $-(CH_2)_s-$, worin s = 2 bis 10, vorzugsweise 2 bis 4 ist,

$$-CH_2-\underset{\displaystyle CH_3}{\underset{|}{CH}}- \qquad -CH-CH{=}CH-CH-$$

$$-CH_2-CH_2-O-CH_2-CH_2- \qquad -CH_2-\underset{|}{CH}-CH_2-$$

ferner solche der Formeln (XXII) (siehe Formelblatt).

Als $R^2$ eignen sich verschiedene Systeme. So können in Formel (I) bzw. (Ia) z. B.

$R^2$ und $R^5$ gleich oder verschieden sein und einen Rest von Anhydriden der Formeln (II) bis (IX) und (XI) bis (XV), wobei in diesen Formeln die an den Rest $R^2$ gebundene Anhydridgruppe von Formel (I) jeweils mit dargestellt ist

$R^3$ ein Ringsystem der Gruppe Benzol-, Naphthalin-, Phenanthren-, Aminonaphthalin-, Bicycloocten-, Cyclopentan-, Tetrahydrofuranskelett und

$R^4$ einen zwei- bis fünfwertigen aliphatischen Kohlenwasserstoffrest mit 1 bis 20, vorzugsweise 1 bis 15, insbesondere 2 bis 8 C-Atomen, der gegebenenfalls mindestens einmal durch Sauerstoffbrükken oder durch eine $-HC{=}CH$-Gruppe unterbrochen ist oder mit einer Estergruppe mit 1 bis 6, vorzugsweise 1—3 C-Atomen oder durch eine COOH-Gruppe substituiert ist, einen aromatischen Rest mit 6 bis 43 C-Atomen gemäß Formeln (XVI) bis (XXI) (siehe Formelblatt), wobei die aromatischen Reste gegebenenfalls durch mindestens einen Rest $R^6$ der Gruppe Alkyl, Alkoxy mit jeweils 1 bis 6 C-Atomen und Halogen substituiert sind, einen Piperazinrest oder einen Rest der Formel (XXIII) oder (XXIV) (siehe Formelblatt), worin in Formeln (XX) und (XXI)

X = die Bedeutung gemäß einer der Formeln (XXII) (siehe Formelblatt) hat,

Z den Rest $-(CH_2)_m-$ (m = 2 bis 8) oder einen der aromatischen Reste gemäß Formel X (siehe Formelblatt),

r und u jeweils eine ganze Zahl von 1 bis 8, vorzugsweise 1 bis 4,

y eine ganze Zahl von 1 bis 4 und

z 1 oder 2 bedeuten.

Darüber hinaus kann $R^5$ auch den Rest eines Di- oder Tricarbonsäuresystems, z. B. von Trimellitsäure, Phthalsäure, 4-Aminophthalsäure, Endomethylentetrahydrophthalsäure, Hexa- und/oder Tetrahydrophthalsäure, Naphthalsäure, 4-Aminonaphthalsäure, bedeuten, sowie den der Formel IX.

Die erfindungsgemäßen Mischungen besitzen eine ungewöhnlich hohe Reaktivität. Sie ermöglichen eine Härtung, d. h. die Ausbildung eines polymeren Netzwerkes, bereits bei 0° C zu erzielen.

Die Reaktionsprodukte (I) bzw. (Ia) lassen sich durch Umsetzung von oligo- bzw. polymeren Hydroxylgruppen enthaltenden Verbindungen mit solchen Bis-anhydriden herstellen, die eine Gruppierung gemäß einer der Formeln (II) bis (VIII), (XI) und (XIII) bis (XV) aufweisen. Geeignete Bis-anhydride sind die der Formeln (III) bis (VIII), (XI) und (XIII) bis (XV), ferner beispielsweise Pyromellitsäuredianhydrid, Benzophenontetracarbonsäuredianhydrid, Naphthalintetracarbonsäuredianhydrid, Tetrahydrofurantetracarbonsäuredianhydrid, Cyclopentatetracarbonsäuredianhydrid, ferner die Anhydride nach einer

der Formeln (II) und (IIa), wie sie beispielsweise durch Umsetzung von Trimellithsäureanhydrid und/oder der Verbindung (IX), den Anhydriden gemäß Formeln (II) bis (VIII), (XI) und (XIII) bis (XV) und/oder anderen oligomeren Bisanhydriden erhalten werden.

Falls Carbonsäureeinheiten mit freien COOH- oder Estergruppen erwünscht sind, ist es zweckmäßig, die Bisanhydride vor, während oder nach ihrer Ankoppelung an die Verbindungen $R^1$ oder vor ihrem Vermischen mit den Verbindungen c1) bzw. c2) zumindest teilweise zu hydrolysieren bzw. zu verestern.

In der Regel enthält das Reaktionsprodukt I) bzw. Ia) mindestens zwei COOH-Gruppen in Salzform und mindestens eine Estergruppe, so daß die an den Rest $R^1$ gebundenen Moleküle in Form eines Partialesters, vorzugsweise Halbesters, vorliegen, wobei die Estergruppe anstelle von oder zusammen mit einer Anhydridgruppe vorhanden sein kann. Solche Estergruppen können mit einwertigen Alkoholen wie Methanol, Äthanol, Hexanol, Octanol, Laurylalkohol, Stearylalkohol in iso- oder n-Form verestert sein. Diese Partialester können jeweils für sich oder im Gemisch mit anderen Carbonsäureeinheiten verwendet werden. Sie stellen ebenfalls ausgezeichnete Reaktionspartner für die Epoxydverbindungen dar. Wenn die Mischungskomponenten jedoch in dünner Schicht und in Gegenwart von Luftfeuchtigkeit miteinander umgesetzt werden, so ist die Anwesenheit freier COOH-Gruppen nicht unbedingt erforderlich. In vielen Fällen dienen die Salzgruppen bzw. die in Orthostellung zur Estergruppe stehenden Carboxylgruppen als Starter. Sie werden — bei der Reaktion mit Salzgruppen ist Feuchtigkeit notwendig — durch die Reaktion mit den Oxiranringen der Komponente c2) an die Komponente c2) gebunden und setzen sekundäre Hydroxylgruppen frei, welche ihrerseits durch Reaktion mit den Anhydridgruppen neue Carboxylgruppen freisetzen, die mit weiteren Oxiranringen unter Ringöffnung reagieren. So läuft auch hier eine Netzwerkbildung ab, die nach einer Ausführungsform der Erfindung bereits unter milden Bedingungen, z. B. schon bei 0° C geführt werden kann.

Wenn das erfindungsgemäße Bindemittel in Form einer Mischung vorliegt, stellt man in der Regel zunächst ein stabiles Gemisch aus der Epoxydkomponente c2) und/oder der OH-Gruppen enthaltenden Komponente c1) her, dem man kurz vor der Verarbeitung die als Härter wirkenden Säureeinheiten a) der Formeln (II) bis (VIII) und (XI) bis (XV) bzw. deren reaktive Derivate — z. B. in Form ihrer Salze — zusetzt, wobei die Komponente b) ggf. gleichzeitig mit oder nach Komponente a) zugesetzt wird.

Es ist ferner möglich, daß die erfindungsgemäße Mischung neben dem Reaktionsprodukt (I) bzw. (Ia) zusätzlich mindestens eine nicht an eine Polymeren- oder Kondensationskette gebundene Polycarbonsäureeinheit, die eine Gruppierung gemäß Formeln (II) bis (IX), (XI) und (XIII) bis (XV) enthält, jedoch in mindestens teilweise hydrolysierter bzw. in Salzform und/oder Trimellitsäure enthält. Weitere freie Säuren sind z. B. solche der unter $R^5$ aufgezählten, ferner Tetrahydrofurantetracarbonsäure, Benzofurantetracarbonsäure, Benzofuranhexacarbonsäure. Auch diese zusätzlichen Säuren können neben Carboxylgruppen zumindest teilweise verestert, unter Bildung freier Carboxylgruppen hydrolysiert oder versalzt sein. Auch in diesem Fall können die Mischungen bereits unter milden Bedingungen, z. B. bei Raumtemperatur oder sogar bei noch tieferen Temperaturen, z. B. 0° C, zu Filmen mit ausgezeichneten Eigenschaften aushärten. Gegebenenfalls können auch diese zusätzlichen Säuren in Form ihrer Partialester bzw. Partialsalze vorliegen. Die Esterbildung kann entweder am Reaktionsprodukt (II) bzw. (Ia) oder schon vor dessen Herstellung am Anhydrid bzw. an den freien COOH-Gruppen erfolgen.

Der Anteil der oligomeren Anhydridkomponente VI in Form der freien Säuren oder Salze, bezogen auf die Gesamtmenge der Polycarbonsäuren, beträgt zweckmäßig 0,1 bis 99,9, vorzugsweise 30 bis 70 Gew.-%.

Falls die Polycarbonsäuren auch Trimellitsäure enthalten, so beträgt deren Anteil, bezogen auf die Gesamtmenge 0,1 bis 30, vorzugsweise 5 bis 20 Gew.-%.

Bei der Komponente c1) umfaßt der Begriff »polymere Polymerisations- und/oder Kondensationsprodukte« für $R^1$ auch die Oligomeren. Die den Rest $R^1$ des Reaktionsproduktes (I) bzw. (Ia) bildenden bzw. im Bindemittel frei vorhandenen Polyester können in an sich bekannter Weise aus bekannten Polycarbonsäuren, wie Phthalsäure, Isophthalsäure, Terephthalsäure, Halogenphthalsäuren, wie Tetrachlor- bzw. Tetrabromphthalsäure, Adipinsäure, Sebacinsäure, Fumarsäure, Maleinsäure, Endomethylentetrahydrophthalsäure, Trimellitsäure, gegebenenfalls zusammen mit Monocarbonsäuren, wie Benzoesäure, Butylbenzoesäure, Laurinsäure, Isononansäure, Fettsäuren natürlich vorkommender Öle bzw. aus Gemischen oder Anhydriden der genannten Säuren, sofern diese existieren, hergestellt sein. Geeignete Alkoholkomponenten dieser Polyester sind z. B. mehrwertige Alkohole, wie Äthylenglykol, die Propandiole, Butandiole, Pentandiole, Hexandiole, Neopentylglykol, Diäthylenglykol, Cyclohexandimethanol, Trimethylpentandiol, Trimethyloläthan oder -propan, Glycerin, Pentaerythrit, Dipentaerythrit, Bishydroxyäthyliso- oder -terephthalsäureester, Trishydroxyäthylisocyanurat, gegebenenfalls zusammen mit einwertigen Alkoholen, wie Butanol, Octanol, Laurylalkohol, Linoleylalkohol, äthoxylierten bzw. propoxylierten Phenolen oder dergleichen, jeweils einzeln oder im Gemisch.

Die Polyester im Bindemittel bzw. vom Reaktionsprodukt (siehe Formel (I) und (Ia)) können auch durch mindestens teilweisen chemischen Abbau von hochmolekularen Polyestern aromatischer Natur, wie Terephthalsäure-Äthylenglykol- oder -Butandiol-Polyestern, Isophthalsäure-Äthylenglykol- oder Hexandiol-Polyestern, unter Einwirkung von ein- und/oder mehrwertigen Alkoholen, Estern, Dicarbonsäuren oder dergleichen entstanden sein. Bei etwa erfolgter Umsetzung mit einwertigen Alkoholen können diese im Unterschuß umgesetzt worden sein.

Die Kondensationsharze — auch in Form von Polyestern — schließen auch solche mit mindestens einer der folgenden Gruppen Ester, Amid, Imid, Äther, Thioäther, Sulfon, Amin ein. Die Hydroxylgruppen des Restes $R^1$ können auch phenolisch, vorzugsweise jedoch alkoholisch sein. Geeignet sind vor allem Polymerisationsprodukte, die in bekannter Weise durch Homo- oder Copolymerisation von Hydroxyalkylacrylaten, bzw. -methacrylaten, bzw. Maleinaten mit olefinisch ungesättigten Monomeren, z. B. Styrol, $\alpha$-Methylstyrol, Vinyltoluol, Acrylsäurealkylestern, Allylverbindungen, Cyclopentadien und dessen Derivaten hergestellt sind.

Ferner kommen beispielsweise in Frage Polymerisationsharze in Form von Polyvinylalkohol, Copolymeren aus Vinylalkohol mit ungesättigten Monomeren, wie Styrol und/oder Acrylsäureester, wobei diese Copolymeren zumindest partiell verseift sind; Phenolharze mit freien Hydroxymethyl- und/oder Hydroxyäthylgruppen.

Geeignete Phenolharze mit freien OH-Gruppen sind z. B. Resole. Geeignete Phenolkomponenten sind ein- oder mehrwertige, ein- oder mehrkernige Phenole, wie Phenol, die verschiedenen Kresole, Xylenole mit zwei Wasserstoffatomen in ortho- und/oder para-Stellung zur Hydroxylgruppe, Butylphenole, Naphthol, Resorcin, Diphenylolmethan, Diphenylolpropan, vorzugsweise jedoch solche mit mindestens zwei reaktiven Wasserstoffatomen, z. B. Phenol oder Resorcin. Als Aldehydkomponente für die Phenolharze können z. B. Formaldehyd in wäßriger Lösung, als Paraformaldehyd oder in Form anderer formaldehydabspaltender Substanzen, wie Trioxan, Acetaldehyd, z. B. in Form acetaldehydabspaltender Substanzen, höhere Aldehyde, wie Propionaldehyd, Butyraldehyd, Isobutyraldehyd, Benzaldehyd verwendet werden.

Als Alkylphenole werden gegenüber Formaldehyd di- oder trifunktionelle Alkylphenole, insbesondere o- oder p-Alkylphenole mit geraden oder verzweigten Ketten oder cyclischen Alkyl- oder Aralkylresten, deren Alkylgruppe 1 bis 20 C-Atome aufweist, wie p-Isopropyl-, p-tert.-Butyl-, p-Iso-octyl-, p-Iso-nonyl-, p-Iso-dodecyl-, o-sec.-Butyl-, o-Isononyl-, o-Iso-dodecyl-, p-Cyclohexyl- sowie 3,5-Diisopropyl- und 3,5-Di-isobutylphenol eingesetzt. Alle Alkylphenole können auch untergeordnete Mengen höher alkylierter Phenole enthalten. Vorzugsweise werden jedoch die Iso-Verbindungen der vorgenannten Reste, ferner tert.-Butyl-phenole eingesetzt.

Geeignete Resole sind solche, bei denen bei der Kondensation das Molverhältnis Phenol zu Formaldehyd 1 : (0,9 bis 1,8), vorzugsweise 1 : (0,95 bis 1,4) beträgt.

Geeignete Epoxydverbindungen (2) — sowohl für $R^1$ (soweit sie die für $R^1$ genannten Bedingungen erfüllen) als auch frei im Bindemittel vorliegend — sind z. B. Polyepoxyd-alkane mit einer C-Zahl von 4 bis 20, vorzugsweise von 4 bis 12, und einer Oxiranringzahl von 2 bis 6, vorzugsweise von 2 bis 4; ferner epoxydierte Butandienöle, deren C-Alkylierungsprodukte, z. B. Isoprenöle; aliphatische Glycidyläther, z. B. Glycidyläther von Polyolen, wie Äthylenglykol, Di- und/oder Triäthylenglykol, 2,2-Dimethyl-propandiol, Propandiol-1,2 oder -1,3, Butandiol-1,4 oder -1,3, Pentandiol-1,5, Hexandiol-1,6, ferner Glycerin, Trimethylolpropan, Cyclohexyldimethanol, Siloxangruppen enthaltende Glycidyläther, epoxydierte Fettsäureester, z. B. epoxydiertes Sojaöl, epoxydiertes Leinöl, bzw. dimere und/oder trimere Verbindungen dieses Typs; alicyclische Bis-epoxyde, z. B. Vinylcyclohexendioxyd, Limonendioxyd, Bis-(epoxy-cyclohexyl)-methan, bzw. -propan, Dicyclopentadiendioxyd, Bis-(epoxy-cyclopentyläther); epoxydierte aliphatische und/oder cycloaliphatische Allyläther, und/oder Allylester, z. B. Bis(-epoxy-propyl)-hexahydrophthalat, Bis(-epoxy-propyl)-adipat; aber auch epoxydierte Polyester und/oder oligomere bzw. polymere Glycidylacryl- bzw. -methacrylsäureester und/oder deren Copolymere, z. B. mit Acryl- bzw. Methacrylsäureestern, Maleinsäureestern, Äthylen, Propylen, Butylen, Styrol, Vinyltoluol, $\alpha$-Methylstyrol, Vinylcyclohexan; trimerisierte Epoxydverbindungen, z. B. Triglycidylisocyanurat, jeweils einzeln oder im Gemisch.

Zusätzlich können auch Gemische der Epoxydverbindungen bzw. Monoepoxyde allein oder im Gemisch vorstehenden Epoxyden zum Einsatz kommen. Geeignete Monoepoxyde sind z. B. Olefinoxyde, wie Octylenoxyd, Butylglycidyläther, Allylglycidyläther, Phenylglycidyläther, p-Butylphenolglycidyläther, Kresylglycidyläther, 3-(Pentadecyl)-phenolglycidyläther, Styroloxyd, Glycidylmethacrylat, Cyclohexenvinylmonooxyd, Dipentenmonooxyd, Pinenoxyd, Glycidylester von tert.-Carbonsäuren. Insbesondere kann die nicht als Reaktionsprodukt gebundene Komponente b) in Form von mindestens einem Polyepoxyd ggf. im Gemisch mit mindestens einem Monooxyd vorliegen.

Unter den genannten Epoxydverbindungen reagieren insbesondere aliphatische und cycloaliphatische sowohl in freier als auch in gebundener Form sehr leicht mit den Carbonsäureverbindungen a) bzw. deren COOH- und/oder Salzgruppen unter Vernetzung und Polymerenbildung.

Geeignete Alkali- oder Erdalkaliverbindungen sind beispielsweise Hydroxyde, Oxyde, Carbonate von Natrium, Kalium, Lithium, Calcium, Magnesium, Barium; ferner eignen sich die entsprechenden Verbindungen von Zink, Aluminium bzw. Salze der genannten Metalle mit Carbonsäuren bzw. Aminosäuren mit tert. oder quartärem N-Atom, z. B. Acetate oder Salze der N,N-Diäthylaminoessigsäure, der 2-(Dimethylamino)-propionsäure, Tri- oder Tetra-(carboxyalkyl)-amin, jeweils einzeln oder im Gemisch. Geeignete Amine zur Salzbildung sind z. B. solche der Formel

$$R^6—N—R^7 \quad (XXV)$$
$$|$$
$$R^8$$

eine Morpholinverbindung oder ein quartäres Ammoniumsalz einer Monocarbonsäure mit 1 bis 5, vorzugsweise 1 bis 3 C-Atomen, wobei in Formel (XXV) $R^6$, $R^7$ und $R^8$ jeweils gleich oder verschieden sind und Wasserstoff, Aralkyl, z. B. Benzyl, Alkyl mit 1 bis 8, vorzugsweise 1 bis 5 C-Atomen, Cycloalkyl, wie Cyclohexyl oder Hydroxyalkyl mit 1 bis 5, vorzugsweise 1 bis 3 C-Atomen, bedeuten. Beispielsweise seien genannte Trimethyl-, Triäthyl-, Tributylamin, N-Dimethyl-cyclohexylamin, N-Dimethylbenzylamin. In manchen Fällen kann es erforderlich sein, die salzbildenden organischen Basen im Überschuß gegenüber den Carboxylgruppenäquivalenten zu verwenden. Die anorganischen Kationen werden in der Regel im Unterschuß eingesetzt.

Das Verhältnis von Anhydridgruppen im Reaktionsprodukt (I) bzw. (Ia) zu den freien OH-Gruppen der Komponente c1) kann in weiten Grenzen variiert werden, z. B. von 99 : 1 bis 1 : 99, vorzugsweise von 20 : 1 bis 1 : 20.

In vielen Fällen erhält man bereits unter milden Bedingungen, wie bei Raumtemperatur, z. B. bei 20°C oder leicht erhöhter Temperatur, z. B. 80°C und/oder bei Einbrennbedingungen, z. B. bei 120°C und höher, auch ohne Katalysator eine ausgezeichnete Vernetzung. Jedoch wird durch Temperaturerhöhung, z. B. auf 30 bis 210, vorzugsweise 80 bis 190°C, die Härtungszeit außerordentlich verkürzt. Daher werden auch unter Schocktrocknungsbedingungen, wie sie beispielsweise bei Coil- oder Can-Coating-Verfahren verwendet werden, also bei Temperaturen von 200 bis bis 350°C und extrem kurzen Zeiten, z. B. 10 Sekunden bis 3 Minuten, bereits ausgezeichnete Beschichtungen erhalten. Das Verhältnis der freien Carboxylgruppen der Polycarbonsäureeinheiten a) zum Epoxydgruppenäquivalent in den Epoxydverbindungen c2) kann 100 : 1 bis 1 : 100, vorzugsweise 20 : 1 bis 1 : 20 betragen. Innerhalb des bevorzugten Bereichs, z. B. bei einem Verhältnis von 1 : 1, ergeben sich besondes gute filmbildende Eigenschaften. In manchen Fällen kann jedoch auch ein Überschuß an COOH-Gruppen erwünscht sein, z. B. zur Verbesserung der Haftung. Gegebenenfalls macht man auch von überschüssigen Epoxydgruppen Gebrauch, z. B. bei stark lipophilen Systemen, z. B. für Primer. Das gegenseitige Verhältnis wird man daher je nach dem gewünschten Verwendungszweck abstimmen. In der Regel liegt es jedoch innerhalb des angegebenen Bereichs.

Nach einer Ausführungsform der Erfindung enthält die Mischung zusätzlich noch mindestens ein wärmehärtbares Kunstharz der Gruppe Melaminharz und Harnstoffharz jeweils einzeln oder im Gemisch in einem Anteil von bis zu 30, vorzugsweise von 2 bis 15 Gew.-% des Gesamtfestkörpergehalts. Durch einen solchen Zusatz kann insbesondere bei Härtung unter erhöhter Temperatur eine erhebliche Steigerung der Chemikalien- und Lösungsmittelbeständigkeit erzielt werden.

Geeignete Aminharze sind Harnstoff- und/oder Melaminharze mit freien OH-Gruppen, die gegebenenfalls teilweise mit einwertigen Alkoholen mit 1 bis 4 C-Atomen veräthert sind. Das Molverhältnis Melamin-Formaldehyd bei der Kondensation beträgt gewöhnlich 1 : (2 bis 4,5). Als Melaminkörper sind Penta- und Hexamethylolmelamin vorzuziehen.

Zur Beschleunigung bei der Umsetzung der Komponenten a) bis c2) und/oder bei der Härtung kann es zweckmäßig sein, der Mischung einen Katalysator in einem Anteil von bis zu 5, vorzugsweise 0,01 bis 0,5 Gew.-%, bezogen auf Festkörpergehalt, zuzusetzen. Geeignete basische Katalysatoren sind z. B. Diazabicyclooctan, Diazabicyclo-nonen, bzw. -undecen, Imidazolderivate, wie 3-Methyl-, Phenyl- oder Cyclohexylimidazol, Trialkylamine, wie Triäthyl-, Tributyl-, Tricyclohexylamin, N-Alkylpiperidine, N,N'-Dialkylpiperazine, Trialkyl- bzw. Triaryl-phosphine, N,N'-Tetraalkylaminoalkyl-oxamide, N-Dialkylaminoalkyl-oxamidsäurealkylester, ferner die oben als Komponente b) genannten Amine, Hydroxyde, Carbonate und Salze organischer Säuren der Alkalimetalle, wie z. B. Lithiumhydroxyd, Kaliumcarbonat, Lithiumbenzoat, ferner deren Additionsverbindungen mit Kronenäthern oder ähnlichen Liganden sowie Alkalisalze der Polycarbonsäureeinheiten der Formeln (I) und (Ia). Auch Chelate des Magnesiums, Aluminiums und des Titans, wie sie z. B. in der deutschen Offenlegungsschrift P 2 723 492.0 als Carboxylgruppen-Acceptoren beschrieben sind, sind zur Katalyse geeignet. Die vorstehend genannten Amine bzw. Phosphine können auch in Form quartärer Hydroxyde bzw. Halogenide vorliegen, z. B. N-Dimethyl-N-lauryl-N-benzyl-ammoniumchlorid, Tetraäthylammoniumhydroxyd, Triphenyl-benzylphosphoniumbromid.

Darüber hinaus katalysieren auch Salze der vorgenannten organischen Basen mit organischen Säuren, z. B. mit Essigsäure, Propionsäure, Laurinsäure oder Salizylsäure die beanspruchten Reaktionen. Es können auch Katalysatorengemische zum Einsatz kommen.

Die Katalysatoren für die Bildung des Reaktionsproduktes (I) bzw. (Ia) bzw. für die Härtung können gleich oder verschieden sein. Sie können in jeder Stufe der Umsetzung der Komponenten a) bis c2) zugesetzt werden. Es ist aber nicht unbedingt erforderlich.

Die erfindungsgemäßen Bindemittel, insbesondere die Reaktionsprodukte (I) bzw. (Ia), sind in der Regel klare bis milchig trübe, je nach ihrem chemischen Aufbau niedrig- bis hochviskose Flüssigkeiten von ausgezeichneter Lagerstabilität. Ihr Festkörpergehalt ist in weiten Grenzen variierbar. Sie können aber auch pastösen Charakter haben. Sie können einen hohen Anteil an Pigmenten und/oder Füllstoffen enthalten. Dabei zeigen sie außerordentlich gute Benetzungseigenschaften. Sie sind ohne Lösungsmittelzusatz mit Wasser beliebig verdünnbar ohne auszuflocken und zeigen keinerlei Viskositätsanomalien. Sie können daher zweckmäßig in Form einer wäßrigen Lösung, gegebenenfalls auch im Gemisch mit wasserlöslichen oder wasserunlöslichen Lösungsmitteln vorliegen. Ganz allgemein werden die erfindungsgemäßen härtbaren Bindemittel den verschiedensten Einsatzzwecken gerecht.

Im Rahmen der Erfindung liegt auch ein Verfahren zur Herstellung der erfindungsgemäßen Bindemittel, das dadurch gekennzeichnet ist, daß gleichzeitig oder in beliebiger Reihenfolge in mindestens einer Stufe

a) eine halogenfreie cyclische Polycarbonsäureverbindung und
b) eine mit COOH-Gruppen ein Salz bildende Substanz der Gruppe Alkali-, Erdalkali-Verbindungen, Zink- und Aluminiumverbindungen, organische Basen und/oder Ammoniak mit
c1) einem OH-Gruppen enthaltenden Polymeren, das den Rest $R^1$ bilden kann und/oder
c2) einer Epoxyverbindung,

unter Bildung von Reaktionsprodukten der Formel (I) bzw. (Ia) umgesetzt werden, wobei etwa vorhandene Anhydridgruppen in einer beliebigen Verfahrensstufe, spätestens während der Salzbildung, hydrolysiert werden. Die Hydrolyse kann auch nur partiell erfolgen.

Die Umsetzung kann in einer oder mehreren, vorzugsweise bis zu 4 Stufen erfolgen. So ist es beispielsweise möglich, daß

I) in erster Stufe das OH-Gruppen enthaltende Polymer c1) mit der Polycarbonsäureverbindung a) umgesetzt und das Umsetzungsprodukt in zweiter Stufe hydrolysiert wird, worauf in dritter Stufe die Epoxydverbindung c2) und darauf in vierter Stufe die Komponente b) unter Salzbildung umgesetzt wird oder
II) in erster und zweiter Stufe wie unter I) gearbeitet wird, daß in dritter Stufe die Salzbildung mit Komponente b) erfolgt und in vierter Stufe die Epoxydverbindung c2) umgesetzt wird oder
III) in erster Stufe die Polycarbonsäureverbindung a) in Form des Anhydrids hydrolysiert wird oder daß man von der Polycarbonsäureverbindung a) unmittelbar in Form der freien Säure ausgeht und diese bzw. das Hydrolyseprodukt mit der Epoxydverbindung c2) umsetzt, worauf die Salzbildung durch Umsetzung mit Komponente b) erfolgt oder
IV) in erster Stufe das OH-Gruppen enthaltende Polymer c1) mit der Polycarbonsäureverbindung a) umgesetzt und das Umsetzungsprodukt in zweiter Stufe hydrolysiert wird und daß in dritter Stufe oder gleichzeitig mit der Hydrolyse die Salzbildung mit Komponente b) erfolgt, oder
V) in erster Stufe die Komponenten c1) und c2) gleichzeitig mit der Polycarbonsäureverbindung a) umgesetzt werden, worauf die Hydrolyse und die Salzbildung mit Komponente b) entweder gleichzeitig oder nacheinander erfolgen oder
VI) in einer Verfahrensstufe die Komponenten a) bis c2) unter gleichzeitiger Hydrolyse umgesetzt werden oder
VII) die Polycarbonsäureverbindung a) in erster Stufe mit Komponente b) unter Salzbildung umgesetzt und, sofern Komponente a) Anhydridgruppen enthält, gleichzeitig der Hydrolyse unterworfen wird, und daß das so erhaltene Produkt in zweiter Stufe mit der Epoxydverbindung c2) umgesetzt wird.

Je nach den eingesetzten Mengenverhältnissen der Komponenten a) bis c2) können in dem Bindemittel noch nicht umgesetzte Anteile der Komponenten a) bis c2) vorhanden sein. Es ist jedoch auch möglich, daß weitere Anteile dieser Komponenten nachträglich noch zusätzlich zum Reaktionsprodukt zugesetzt werden, wobei die chemische Struktur der umgesetzten und der nachträglich zugegebenen Komponenten gleich oder verschieden sein kann, je nach dem gewünschten Verwendungszweck bzw. den Eigenschaften der erfindungsgemäßen Bindemittel.

Wie die vorstehenden Ausführungsformen des erfindungsgemäßen Verfahrens zeigen, ist es in manchen Fällen auch möglich, einen gesonderten Verfahrensschritt der Hydrolyse wegzulassen, ebenso entweder die chemische Umsetzung der Komponente c1) oder der Komponente c2) zur Bildung des Reaktionsprodukts der Formel (I) bzw. (Ia).

Die zur Hydrolyse verwendete Wassermenge kann bis zu 500%, vorzugsweise 5 bis 300%, der theoretisch erforderlichen Menge betragen.

Aufgrund ihres unterschiedlichen chemischen Aufbaus sind die erfindungsgemäßen Bindemittel für eine vielseitige Anwendung geeignet, z. B. zur Herstellung von bei Raumtemperatur oder in der Wärme härtenden Beschichtungssystemen. Sie sind auch kombinierbar mit wäßrigen Kunststoffdispersionen, wie eines Thermoplasten, z. B. solchen auf Basis von Polyvinylacetat, -vinylchlorid, Acryl- und/oder Methacryl-Polymeren, Polyvinyläther, -chloropren, -acrylnitril und Äthylen-Butadien-Styrol-Copolymerisaten. Besonders verträglich sind sie mit Dispersionen solcher Copolymerisate, die durch Pfropfen mit geeigneten Monomeren, z. B. Hydroxyalkylacrylat bzw. methacrylat, wobei der Hydroxyalkylrest z. B. der Hydroxyäthyl- oder -propylrest ist, Acrylsäure, Maleinsäure oder deren Estern, Vinylestern von gesättigten oder ungesättigten aliphatischen, cycloaliphatischen und/oder aromatischen Carbonsäuren oder dergleichen stärker polar gemacht wurden. Gegebenenfalls werden die Dispersionen zusammen mit Dispersionshilfsmitteln eingesetzt.

Mit den erfindungsgemäßen Bindemitteln, die eine ausgezeichnete Stabilität gegenüber UV-Strahlung aufweisen, können unpigmentierte, pigmentierte oder mit anderen Füllstoffen versehene Beschichtungssysteme, z. B. Lacke, hergestellt werden, die gegebenenfalls auch unter der Einwirkung

von Katalysatoren bereits bei Raumtemperatur genügend rasch härten und dann Überzüge mit ausgezeichneten mechanischen Eigenschaften liefern. Man erhält dabei Filme mit hoher mechanischer Festigkeit und hoher chemischer Beständigkeit.

Die erfindungsgemäßen Bindemittel lassen sich auf die verschiedensten Unterlagen aufbringen, sofern diese den Härtungstemperaturen des Überzugs standhalten. Geeignete Unterlagen sind z. B. Keramik, Holz, Glas, Beton, Kunststoffe, vorzugsweise Metall, wie Eisen, Zink, Titan, Kupfer, Aluminium, Stahl, Messing, Bronze, Magnesium oder dergleichen, wobei die Unterlagen gegebenenfalls noch durch geeignete mechanische und/oder chemische Vorbehandlung haftfreudiger bzw. korrosionsbeständiger gemacht werden können. Jedoch haften die erfindungsgemäßen Bindemittel ausgezeichnet auf den verschiedensten Metallunterlagen ohne haftvermittelnde Grundierung bzw. Zwischenschicht. Die gute Haftung dieser Lackierungen entspricht den Werten 6T 0A bis 6T 1A nach den Prüfvorschriften gemäß DIN 53 151. Außerdem lassen sich diese Überzüge sehr gut verformen, weisen hohe Wetterbeständigkeit und ausgezeichnete chemische Beständigkeit auf.

Die erfindungsgemäßen Mittel sind für die Herstellung von korrosionsschützenden Überzügen und/oder Zwischenbeschichtungen für die verschiedensten Anwendungsgebiete geeignet, insbesondere als resistente Lackierungen und Mattlackierungen. Weiter eignen sie sich für die Beschichtung und Auskleidung von Gegenständen, die mit Treibstoffen und Lösungsmitteln in Berührung kommen, außerdem für Schutzüberzüge gegen atmosphärische Einflüsse, wie Straßenmarkierungen, Bauteile für elektrotechnische Zwecke bzw. deren Elemente, insbesondere für elektrische Leiter, sowie für Beschichtungen von thermisch beanspruchten Gegenständen.

Aufgrund ihrer günstigen Eigenschaften sind die erfindungsgemäßen Mittel auch hervorragend für die Einschichtlackierung geeignet. Je nach Wahl der Komponenten können mit den erfindungsgemäßen Mitteln beschichtete Bleche nachträglich durch Tiefziehen, Abkanten, Profilieren, Prägen oder dergleichen ohne nennenswerte Beeinträchtigung der übrigen günstigen Eigenschaften verformt werden. Die haftende Überzugsschicht kann unverändert bleiben, sie kann aber auch als Zwischenschicht, also als Unterlage für weitere Überzüge dienen, die wiederum aus demselben oder einem anderen üblichen Beschichtungsmaterial bestehen können.

Die erhaltenen Überzüge stellen je nach Wunsch glänzende oder matte Filme mit ausgezeichneter mechanischer und chemischer Beständigkeit und mit guter Wetterstabilität dar. Andererseits ist es auch möglich, Mattlacke mit hervorragenden mechanischen und chemischen Eigenschaften herzustellen. Hierfür ist überraschenderweise kein hoher Anteil an Pigmenten und Füllstoffen erforderlich.

Eine weitere Verwendung der erfindungsgemäßen Bindemittel besteht in ihrer Eignung als vernetzbares Harz mit emulgierender Wirkung oder Schutzkolloide, Verdickungs- bzw. Thixotropiermittel für wäßrige Dispersionen und Kunstharze. Wegen ihrer guten Verdünnbarkeit und ihrer anderen günstigen Eigenschaften eignen sich die erfindungsgemäßen Bindemittel auch zur Verwendung für die Elektrotauchlackierung.

Eine weitere Möglichkeit ist die Verwendung der erfindungsgemäßen Bindemittel für mit Wasser verdünnbare Klebstoffe. Auch als Bindemittel für textile, organische und/oder anorganische Materialien sind sie einsetzbar. Sie sind auch zur Verwendung für härtbare Formmassen, Gießharze, Kitte, zellige oder poröse Stoffe, wie Schaumstoffe und als Isolierlack geeignet.

Im Rahmen der Erfindung liegt auch die Verwendung des wasserlöslichen reaktiven Bindemittels A) zusammen mit einer wäßrigen Kunststoffdispersion eines Polymerisationsharzes als Bindemittel für mit Wasser verdünnbare Klebstoffe, wobei das Harz der Kunststoffdispersion mindestens ein Polymerisationsharz B1) eines gegebenenfalls zumindest teilweise mit COOH- und/oder Sulfonsäuregruppen modifizierten Elastomeren und/oder B2) eines Acryl-Copolymerisats ist, wobei der Anteil des reaktiven Bindemittels A) 5—40, vorzugsweise 10 bis 20 Gew.-% und derjenige der Komponente B) 60—95, vorzugsweise 80—90 Gew.-%, jeweils bezogen auf den Gesamtfestkörpergehalt, ausmacht. A und B ergänzen sich zu 100 Gew.-%.

Das erfindungsgemäß verwendete wasserlösliche reaktive Bindemittel hat gegenüber den bisher verwendeten Bindemitteln den Vorteil, daß es vor seiner Einarbeitung in den Klebstoff bereits in wasserlöslicher bzw. mit Wasser verdünnbarer Form vorliegt und nicht erst in Wasser emulgiert oder dispergiert werden muß. Außerdem enthalten diese Bindemittel reaktive chemische Gruppen, die unter bestimmten Bedingungen gegenseitig und/oder — bei entsprechender Wahl der Elastomeren- oder Acrylharzkomponente — auch mit dieser reagieren können, so daß eine echte chemische Vernetzung sowohl zwischen den einzelnen Molekülen der Komponenten des reaktiven Bindemittels als auch zwischen diesen und den Elastomeren- bzw. Acrylharzkomponenten eintreten können.

Auf diese Weise wird die Festigkeit der Verklebungen bei Raumtemperaturen und auch bei erhöhter Temperatur um ein Vielfaches größer als bei Anwendung der bisherigen in Wasser dispergierten chemisch nicht reaktiven Harze.

Geeignete Elastomeren B1) bei dieser Ausführungsform der Erfindung sind beispielsweise ein Natur- oder Kunstkautschuk-Latex, z. B. auf der Basis von Polybutadien, Acrylnitrilkautschuk, Butadien-Styrol-Copolymerisat, chlorsulfoniertem Polyäthylen, vorzugsweise jedoch Poly-2-chlorbutadien, Poly-2-chlorbutadien mit einpolymerisierter Carbonsäure, z. B. Acryl- und/oder Methacrylsäure.

Geeignete Acryl-Copolymere B2) sind beispielsweise Copolymerisate von Acryl-Verbindungen, wie Acryl- oder Methacrylsäure, Maleinsäure oder deren Derivaten, z. B. Ester, Amiden, Nitrilen, vorzugsweise Alkyl- und/oder Hydroxyalkylacrylaten oder -methacrylaten mit 1 bis 6 C-Atomen im Alkyl- bzw. Hydroxyalkylrest.

Geeignete Co-Monomere für die Komponente B2) sind z. B. Maleinsäureester, Vinylester gesättigter oder ungesättigter aliphatischer, cycloaliphatischer und/oder aromatischer Carbonsäuren, Styrol, $\alpha$-Methylstyrol, Vinyltoluol.

Durch die Gegenwart von reaktiven Gruppen, z. B. COOH- und/oder Sulfonsäuregruppen, und gegebenenfalls zusätzlich OH-Gruppen in mindestens einer der Komponenten B1) und B2) läßt sich die Klebfestigkeit der aus den erfindungsgemäßen Klebstoffen hergestellten Klebungen erheblich steigern. Wenn die Komponenten B1) bzw. B2) einpolymerisierte Carbonsäuregruppen, z. B. von Acryl- oder Methacrylsäure enthalten, können bei der Vernetzung des Klebstoffes bei erhöhter Temperatur nicht nur diese, sondern auch die der reaktiven Polymerenmischung mit den vorhandenen Epoxydgruppen unter Bildung eines Netzwerkes von $\alpha$-Oxycarbonsäureestern reagieren.

Zweckmäßig ist bei Verwendung der erfindungsgemäßen Bindemittel für Klebstoffe die Polycarbonsäureeinheit a) auf der Basis von Trimellithsäureanhydrid und einem Alkylenglykol mit 2 oder 3 C-Atomen im Alkylenrest aufgebaut.

Wenn das erfindungsgemäß für Klebstoffe verwendete reaktive Bindemittel A) ein Reaktionsprodukt der oben genannten Formeln (I) bzw. (Ia) enthält, wobei die obige Formelerklärung gilt, ist es zweckmäßig, daß der Rest $R^1$ in Formel (I) bzw. (Ia) der Rest eines verzweigten Polyesters auf Basis mindestens einer Dicarbonsäure, eines aliphatischen Diols und eines Triols ist, daß die freien COOH-Gruppen am Rest $R^2$ und/oder $R^5$ teilweise mit mehrwertigem Alkohol verestert sind und die restlichen Anhydrid- bzw. COOH-Gruppen in Form eines quartären Ammoniumsalzes vorliegen und daß die Epoxydverbindung c2) in Form eines epoxydierten Fettsäureesters liegt.

Geeignete Bindemittel A) lassen sich z. B. aus c1) OH-Gruppen enthaltenden Polyestern, z. B. solchen auf Basis von Phthalsäureanhydrid, Neopentylglykol, Trimethylolpropan, a) einem Bis-anhydrid, z. B. aus 1 Mol Äthylenglykol, und 2 Mol Trimellithsäureanhydrid, c1) epoxydierten Ölen, z. B. Sojaöl und/oder Leinöl, und b) Ammoniak und/oder Trialkylamin herstellen.

Der erfindungsgemäße Klebstoff kann auf die zu verklebende Fläche aufgebracht und mit oder ohne Anwendung erhöhter Temperatur, z. B. bei einer Temperatur von 80 bis 150, vorzugsweise 100 bis 120° C verfestigt werden. Im allgemeinen wird man die Verfestigung bei erhöhter Temperatur vorziehen. Um die Klebwirkung noch zu erhöhen, ist es vorteilhaft, den Klebstoff vor dem Aufbringen auf die zu verklebende Fläche durch Wärmebehandlung bei 40 bis 80, vorzugsweise 55 bis 65° C, zu aktivieren. Im einzelnen verfährt man dabei wie folgt:

Die wäßrige kolloidale Dispersion eines Polymerisats B), z. B. von Poly-2-chlorbutadien ohne oder mit einpolymerisierte Carbonsäure-Gruppierungen, z. B. Acryl- oder Methacrylsäure oder eine Mischung von unmodifiziertem Poly-2-chlorbutadien mit Poly-2-chlorbutadien mit einpolymerisierter Carbonsäure, oder ein Copolymerisat B2) verschiedener Acrylester, gegebenenfalls mit noch weiteren Co-Monomeren, oder eine Mischung eines solchen Copolymerisats mit den entsprechenden, jedoch mit Carbonsäure modifizierten Copolymeren, werden mit dem wäßrigen Hydrosol des reaktiven Bindemittels, z. B. unter intensivem Rühren bis zur Homogenität gemischt, wobei je nach Bedarf noch die unten angegebenen Hilfsmittel oder Füllstoffe zugesetzt werden können.

Der Klebstoff kann dann bei einer Temperatur von 60 bis 110, vorzugsweise 70 bis 90° C, mit der zu verbindenden Fläche in Kontakt gebracht und verfestigt werden.

Diese Klebstoffmischungen können sofort für Klebezwecke eingesetzt werden, wenn keine sehr hohe Anforderungen an die Klebfestigkeit gestellt werden. Will man jedoch eine maximale Festigkeit, d. h. bei Prüfung der Klebstelle Riß im geklebten Material und nicht in der Klebschicht erreichen, so ist es in der Regel notwendig, daß der fertige Klebstoff entweder einige Wochen bei Raumtemperatur gelagert oder einige Tage in verschlossenen Gefäßen auf 40 bis 80, vorzugsweise 55 bis 65° C erwärmt werden. Während dieser Zeit tritt bereits eine Vernetzung zwischen den COOH- und den Epoxydgruppen und damit eine Festigkeitssteigerung innerhalb des reaktiven Bindemittels oder auch zwischen Bindemittel und Elastomeren- oder Acrylkomponente ein, die jedoch nur unvollständig ablaufen darf, weil die Klebrigkeit sonst für die spätere Anwendung als Klebstoff nicht mehr ausreicht. Optimal vorreagierte Klebstoffe können sofort eingesetzt oder aber bei Raumtemperatur mehrere Monate in verschlossenen Gefäßen bis zum Gebrauch ohne Einbuße ihrer Wirksamkeit gelagert werden. Die Verklebung erfolgt in der bei Kontaktklebern üblichen Form, d. h. man rauht die zu verbindenden Teile auf, reinigt sie gründlich, z. B. durch Abbürsten oder Abblasen von etwaigem Staub und beschichtet die miteinander zu verbindenden Teile mit Klebstoff.

Im Gegensatz zu den bisher verwendeten wäßrigen Kontaktklebern wartet man jedoch nach dem Klebstoffauftrag nicht, bis das Dispergiermittel Wasser verdunstet ist, sondern man beschleunigt die Verdunstung durch Wärmezufuhr und erhitzt dabei gleichzeitig die mit Klebstoff beschichtete Fläche auf Temperaturen über 100° C. Hierbei nimmt in dem Maße, in dem das Wasser verdunstet, die Klebrigkeit zunächst zu, bis durch weitere Reaktion zwischen den noch vorhandenen Carboxyl- und Epoxydgruppen infolge fortschreitender Vernetzung eine Klebrigkeitsminderung eintritt. Der Bereich der maximalen Klebrigkeit und der maximalen Klebfestigkeit ist von verschiedenen Faktoren abhängig, z. B. von der Klebstoffmenge, der aufzuwendenden Wärme, den zu verklebenden Flächen oder dergleichen. Er läßt sich zeitlich leicht bestimmen.

Nach einer solchen vorher bestimmten Erwärmungsdauer werden die mit Klebstoff beschichteten und erhitzten Teile noch heiß aufeinandergelegt und sofort kurz, z. B. 20 bis 30 s bei 0,3 bis 0,5 mPa, zusammengepreßt. Danach entfernt man die verklebten Körper, z. B. Schichtkörper aus der Presse und läßt abkühlen. Man kann die Klebschicht sofort belasten oder weiterverarbeiten, da die Klebung bereits die maximale Endfestigkeit besitzt.

Auf diese Weise lassen sich mit den Klebstoffmischungen, die dieser Erfindung zugrunde liegen, eine Vielzahl von Materialien in kurzer Zeit zu einem sehr festen Verbund zusammenkleben, z. B. Gummi. Kunststoffe, Leder, Holz, Holzspanplatten, Schichtpreßstoffplatten, Textilien, Filz, Gewebe, Gewirke, Vlies, Teppiche, Kork, Pappe, Metall oder dergleichen entweder für sich allein oder im gegenseitigen Verbund.

Zur Erreichung bestimmter Eigenschaften können die Klebstoff-Mischungen außerdem in geringer Menge noch übliche Zusätze, z. B. Antischaummittel, Netzmittel, Verdickungsmittel, Alterungsschutzmittel, Füllstoffe oder dergleichen enthalten, so daß man fertige Kontakt-Klebstoffe erhält, die für eine Vielzahl von Anwendungen geeignete sind.

In den folgenden Vorschriften und Beispielen bedeuten jeweils, wenn nicht anders angegeben, T Gewichtsteile und % Gewichtsprozent. Sie beziehen sich auf den Gehalt an nichtflüchtigen Feststoffen, soweit nichts anderes angegeben ist. Die Zusammensetzung der Anhydride bzw. der Säuren, die durch Hydrolyse aus den Anhydriden gewonnen wurden, wurde jeweils mittels Gel-Permeationschromatographie bestimmt.

Wenn nicht anders angegeben, werden als Polycarbonsäure-Komponente a) jeweils Anhydridgemische hergestellt durch Umsetzung von Trimellitsäureanhydrid mit Propandiol-1,2, bestehend aus Trimellitsäureanhydrid und Anhydriden (XIV) und (XV) und als OH-Gruppen enthaltende Komponente c) jeweils Polyester, hergestellt auf der Basis von Phthalsäureanhydrid, Isophthalsäure, Maleinsäureanhydrid, Propanol und Glycerin, verwendet.

Als Epoxydverbindungen $c_2$) werden verwendet:

A — epoxydiertes Leinöl
B — epoxydiertes Sojaöl
C — epoxydiertes Butadienöl
D — Pentandiol-1,5-diglycidyläther
E — 3,4-Epoxycyclohexylmethyl-3',4'-epoxycyclohexancarboxylat
F — Diphenylolpropan-bis-glycidyläther
G — Tetrahydrophthalsäurebisglycidylester
H — Dicyclopentadiendioxyd
I — Hexafluor-diphenylolpropan-bisglycidyläther
J — Epoxydester Phenol-Formaldehyd-Novolak
K — 1,3-Bis-[3(2,3-epoxypropoxy)-propyl]-tetramethyldisiloxan

In den Beispielen über die Verwendung für Klebstoffe wurde nach dem Abkühlen der Klebschicht auf Zimmertemperatur die Schälfestigkeit der Verklebungen bei einer Schälgeschwindigkeit von 200 mm/min im Schälwinkel von 180° C (Anfangsschälfestigkeit) geprüft. Die Werte sind in der Tabelle 1 angegeben.

## Beispiele

### (I) Herstellung des Reaktionsprodukts (I) bzw. (Ia)

#### 1) (4-Stufen-Eintopf-Methode)

100 T Anhydrid-Gemisch (Säurezahl = SZ/$H_2O$ = 560) und 30 T Aceton werden bei 50° C homogenisiert. Dazu wird eine Lösung von 127 T eines Polyesters (OH-Zahl = 107) in 70 T Methyläthylketon innerhalb einer Stunde zugetropft. Bei 90° C wird so lange gerührt, bis das Reaktionsgemisch eine Säurezahl in Wasser von 197 (bezogen auf 100%iges Harz) erreicht hat. Danach werden noch 15 T Wasser zugemischt. Nach 6stündigem Rühren bei 80 – 90° C liegt die Säurezahl in Butanol bei 180 (100%iges Harz). Die Gemischtemperatur wird auf 60° C gesenkt und 133 T eines epoxydierten Leinöls (Epoxydzahl = 8,9) innerhalb von 2 Stunden zugetropft. Die Mischung wird so lange gerührt, bis die Säurezahl in Butanol auf 90 abgesunken ist. Danach wird eine Mischung von 56 T Dimethylaminoäthanol in 540 T Wasser eingerührt. Es wird eine hellgelbe, opaleszierende Lösung erhalten. Anschließend wird bei 0,1 bar und 40° C das organische Lösungsmittel abdestilliert. Nach Filtration wird eine gelbliche, praktisch klare wäßrige Harzlösung erhalten. Diese zeigt im Ultramikroskop deutliche Beugungsscheibchen. Der Festkörpergehalt (1 h bei 125° C) beträgt ca. 39%.

Gegebenenfalls kann man auch so vorgehen, daß das organische Lösungsmittel zumindest teilweise im Endprodukt belassen wird.

2) bis 24)

Die Reaktionsprodukte nach Beispielen 2 bis 24 werden analog Beispiel 1 hergestellt.

25) (2-Stufen-Methode)

131,4 T Epoxyverbindung A) (EP-Zahl = 8,9) werden bei 40°C mit 183,6 T einer 66,7%igen Lösung eines Polyesters mit freien OH-Gruppen (OH-Zahl = 107) 30 Minuten homogenisiert. Danach werden 100 T gepulvertes Anhydridgemisch ($SZ/H_2O$ = 550) innerhalb einer Stunde in kleinen Portionen eingetragen. Die Mischung wird bei 50° – 70° C so lange gerührt, bis eine Probe in Wasser/Ammoniakwasser 25%ig (3 : 1) klar löslich ist. Dies ist nach etwa 5 Stunden der Fall. Das Reaktionsgemisch wird im Vakuum (0,1 bar) vom Lösungsmittel befreit und eine Mischung von 57 T Ammoniakwasser (25%ig) und 450 T Wasser eingerührt. Es wird eine hellgelbe, leicht opaleszierende Harzlösung erhalten. Der Festkörper beträgt ca. 41%.

26) (3-Stufen-Methode)

185 T Epoxydverbindung B (EP-Zahl = 6,4), 188 T Polyacrylat mit freien OH-Gruppen (OH-Zahl = 70), 30 T Wasser werden bei 30°C verrührt. Nach Zugabe von 0,1 T Triäthylamin und 0,5 T Essigsäure werden innerhalb von 3 Stunden 90 T Anhydridgemisch ($SZ/H_2O$ = 498) eingetragen. In 4 Stunden wird die Temperatur auf 55° C gesteigert und bei dieser Temperatur so lange gerührt, bis eine Probe des Reaktionsgemisches in Ammoniakwasser (siehe Beispiel 25) bis auf eine geringe Opaleszenz löslich ist. Nach Einrühren einer Mischung aus 60 T Dimethylaminoäthanol und 600 T Wasser wird eine milchige Harzlösung mit einem Festkörpergehalt von 42,8% erhalten.

Nachstehende Tabelle 1 gibt eine Übersicht über Herstellung und Aufbau der erfindungsgemäßen Bindemittel in Form der Reaktionsprodukte (I) bzw. (Ia).

Darin haben die Beziehungen für Lösungsmittel usw. folgende Bedeutung.

| | | |
|---|---|---|
| MEK | – | Methyläthylketon |
| Ac | – | Aceton |
| Tol | – | Toluol |
| Xyl | – | Xylol |
| CHX | – | Cyclohexan |
| MIK | – | Methylisopropylketon |
| PMSA | – | Pyromellitsäureanhydrid |
| DABO | – | Diazabicyclooctan |
| NPI | – | N-Phenylimidazol |
| DMA | – | Dimethylamin |
| TMA | – | Trimethylamin |
| DMAE | – | Dimethylaminoäthanol |
| TDMAP | – | Tris-Dimethylaminophenol |
| CHEA | – | N-Cyclohexyl-N-äthylamin |
| BPTDA | – | Benzophenontetracarbonsäuredianhydrid |
| DMP | – | N,N'-Dimethylpiperazin |
| TMAE | – | N,N-Tetramethylaminoäthan |
| DMAP | – | Dimethylaminopropanol-1 |

In Tab. 1 bedeutet »Anfangs-SZ« die Säurezahl des Reaktionsproduktes aus dem OH-Polymeren $c_1$) und der Polycarbonsäureeinheit a) vor der Hydrolyse. »End-SZ 1« bedeutet Säurezahl dieses Produktes nach der Hydrolyse. »End-SZ 2« bedeutet die Säurezahl nach der Umsetzung mit der Epoxydverbindung $c_2$).

(II) Lacktechnische Prüfung

Die nach Beispielen 1 bis 26 hergestellte wäßrige Bindemittellösung wird in einer Perlmühle oder einer Kugelmühle mit Titandioxydpigment (1 : 1, bezogen auf Festharz) homogenisiert, mit Wasser auf Spritzviskosität (20 DIN-sec/4 mm-Becher) eingestellt und auf phosphatierten Eisenblechen mit der Spritzpistole in bekannter Weise aufgebracht.

27) (Kombination mit Dispersionen für Einbrennzwecke)

200 T der wäßrigen Harzlösung aus Beispiel 2 (34,4% Festkörper, s. Tab. 1) werden mit 163 T Titandioxydpigment in einer Perlmühle homogenisiert. Danach werden 272 T einer Acrylatdispersion (50%ig in Wasser), die zur besseren Verträglichkeit ca. 5 Mol-% Hydroxyäthylacrylat einpolymerisiert enthält, und 14 T Hexamethoxymethylmelamin zugegeben. Das Gemisch wird wie die Proben 1—26 eingestellt.

28) (Kombination mit Dispersionen für die Lufttrocknung)

200 T der wäßrigen Harzlösung aus Beispiel 2 (34,3% Festkörper, s. Tab. 1) werden mit 150 T Titandioxydpigment in der Perlmühle homogenisiert. Danach werden 280 T einer Polyvinylchlorid-Vinylacetat-Äthylen-Dispersion (50%ig in Wasser) mit einer Glasübergangstemperatur von 20°C eingemischt. Die Bindemittelkombination wird mit Ammoniak (10%ig in Wasser) auf einen pH-Wert von 7,5 eingestellt. Das Bindemittelgemisch kann in dieser Form durch Streichen oder Rollen z. B. auf Holz oder — nach Probe 28 auf phosphatiertes Eisenblech — als Malerlack appliziert werden. Es werden hochglänzende, gilbungsbeständige Lackierungen erhalten.

29) (Kombination mit Melaminharzen)

300 T des wäßrigen Bindemittelsystems aus Beispiel 10 (33,8% Festkörper, s. Tab. 1) werden mit 10 T Hexamethoxymethylmelamin und 105 T Titandioxydpigment in der Kugelmühle homogenisiert. Nach Verdünnen auf Spritzviskosität (30 DIN-sec/4 mm-Becher) mit Wasser wird das Bindemittel auf phosphatierte Bleche aufgebracht, gehärtet und geprüft.

30) (Kombination mit Melaminharz)

300 T des wäßrigen Bindemittels aus Beispiel 7 (41% Festkörper, s. Tab. 1) werden mit 5 T Hexamethoxymethylmelamin und 100 T Titandioxydpigment in der Perlmühle homogenisiert und die Masse wie Probe 29 weiterverarbeitet.

31) (Elektrophoreselack)

Das in Beispiel 10 beschriebene wäßrige Bindemittel wird nach bekannten Methoden mit Eisenoxydrot pigmentiert (100 : 50, fest auf fest). Anschließend wird das pigmentierte Bindemittel mit Wasser/Äthylenglykolmonoäthyläther (10 : 1) auf 15% Festkörper verdünnt. Das Elektrophoresebad wird auf 25°C eingestellt und phosphatierte Eisenbleche eingehängt. Bei einer Spannung von 150 V wird das Bindemittel an der Anode abgeschieden. Nach Trockenen und Einbrennen werden hoch salzsprühbeständige und chemikalienbeständige Überzüge erhalten, auf denen andere Beschichtungen hervorragend haften.

Die Filme aus Proben 1 bis 31 wurden unter den in Tabelle 2 angegebenen Bedingungen gehärtet und geprüft. Die Prüfergebnisse sind ebenfalls in Tab. 2 zusammengestellt.

(III) Diskussion der Ergebnisse

Wie aus Tabelle 2 ersichtlich, zeichnen sich die aus den erfindungsgemäßen Mischungen erhaltenen Überzüge durch ausgezeichnete Pendelhärte, Glanz, hohe Lösungsmittel- und Wasserbeständigkeit, sehr gute Elastizitätseigenschaften, wie die Erichsen- und Schlagtiefung zeigen, aus. Außerdem zeigen die Gitterschnittswerte durchweg die ausgezeichnete Haftung der Filme auf metallischen Unterlagen.

Tabelle 1

| | Beispiel 2 | 3 | 4 | 5 | 6 |
|---|---|---|---|---|---|
| Anhydridgemisch a) | | | | | PMSA |
| Säurezahl in $H_2O$ | 560 | 498 | 486 | 486 | 1028 |
| T | 100 | 100 | 100 | 100 | 100 |
| Lösungsmittel | MEK | Ac/Tol (1 : 1) | Xyl | Pentanol-3 | Ac/CHX (3 : 1) |
| T | 75 | 104 | 108 | 107 | 172 |
| OH-Polymer $C_1$) | Polyester | Polyester | Polyester | Polyester | Polyester |
| OH-Zahl | 112 | 88 | 88 | 88 | 86 |
| T | 121 | 141 | 141 | 142 | 300 |
| $H_2O$/T | 15 | 12 | 12 | 12 | 16 |
| Katalysator | Piperazin | DABO | Li-benzoat | NPI | Triäthylamin |
| T | 0,5 | 0,2 | 0,3 | 0,25 | 1,0 |
| Anfangs-SZ $H_2O$ | 195 | 168 | 165 | 168 | 248 |
| End-SZ 1 n-Butanol | 180 | 168 | 168 | 166 | 221 |
| Epoxydverbindung $C_2$) | A | A | A | A | A |
| EP-Zahl | 8,80 | 8,7 | 8,7 | 8,7 | 9,0 |
| T | 131 | 132 | 132 | 131 | 290 |
| End-SZ 2 n-Butanol | 93 | 88 | 86,5 | 86,6 | 221 |
| Salzbildner b) | Ammoniak | Methylamin | DMA | TMA | DMAE |
| T | 40 (25%ig) | 45 (40%ig) | 42 (60%ig) | 67,9 (45%ig) | 72 |
| $H_2O$ T | 530 | 860 | 860 | 858 | 1033 |
| Festkörper % | 34,3 | 30,8 | 32,2 | 30,5 | 41,8 |

Tabelle 1 (Fortsetzung)

| | Beispiel 7 | 8 | 9 | 10 | 11 |
|---|---|---|---|---|---|
| Anhydridgemisch a) | | | | | |
| Säurezahl in $H_2O$ | 500 | 556 | 498 | 486 | 473 |
| T | 50 | 100 | 100 | 101 | 106 |
| Lösungsmittel | — | EA/MEK (1 : 3) | MIK | Xyl/MEK | Ac |
| T | — | 115 | 105 | 200 | 105 |
| OH-Polymer $C_1$) | Polyacrylat | Polyester | Polyester | Polyester | Polyester |
| OH-Zahl | 100 | 88 | 85,6 | 30 | 72,8 |
| T | 208 | 176 | 145 | 413 | 145,4 |
| $H_2O$/T | 7,5 | 15 | 12 | 11,7 | 15 |
| Katalysator | $K_2CO_3$ | N,N-Dimethyl-anilin | Tributylamin | Trimethylamin/ Essigs. | T-DMAP |
| T | 0,7 | 1,0 | 1,5 | 1,7 | 0,7 |
| Anfangs-SZ $H_2O$ | 124 | 164 | 161 | 98,4 | 159,4 |
| End-SZ 1 n-Butanol | 109 | 142 | 161 | 100,7 | 161,0 |
| Epoxydverbindung $C_2$) | A | B | D | A | C |
| EP-Zahl | 8,7 | 6,1 | 10,7 | 8,65 | 6,0 |
| T | 62 | 177 | 105 | 167 | 187 |
| End-SZ 2 n-Butanol | 64 | 90,6 | 89 | 61 | 79,7 |
| Salzbildner b) | Triäthylamin | DMAE | NCHEA | DMAE | DMAE |
| T | 38 | 36,2 | 80 | 63 | 38 |
| $H_2O$ T | 400 | 680 | 513 | 1400 | 642 |
| Festkörper % | 41,0 | 40,1 | 42,7 | 33,8 | 43,9 |

Tabelle 1 (Fortsetzung)

| | Beispiel 12 | 13 | 14 | 15 |
|---|---|---|---|---|
| Anhydridgemisch a) | | | | BPTDA |
| Säurezahl in $H_2O$ | 557 | 498 | 498 | 742 |
| T | 100 | 100 | 100 | 100 |
| Lösungsmittel | Tol/Ac (1 : 1) | MEK | Ac/Xyl (2 : 1) | CHX/Tol (4 : 1) |
| T | 110 | 130 | 90 | 140 |
| OH-Polymer $C_1$) | Polyester | Polyester | Polyester | Polyester |
| OH-Zahl | 73 | 62,5 | 53,7 | 85,6 |
| T | 158 | 199 | 108,3 | 203 |
| $H_2O$/T | 10 | 15 | 11,5 | 12 |
| Katalysator | K-Kronenäther | N,N-TMAE | Tributylamin | N,N′-DMP |
| T | 0,08 (auf K gerechnet) | 0,3 | 1,0 | 1,5 |
| Anfangs-SZ $H_2O$ | 165 | 138 | 210 | 170,7 |
| End-SZ 1 n-Butanol | 158 | 137 | 199 | 172,9 |
| Epoxydverbindung $C_2$) | E | F | G | A |
| EP-Zahl | 11,4 | 9,56 | 11,3 | 8,70 |
| T | 102 | 123 | 105 | 175 |
| End-SZ 2 n-Butanol | 74,5 | 69 | 90 | 91,8 |
| Salzbildner b) | DMAE | Ammoniak (25%ig)/DMAE (1 : 1) | DMAE | DMAE |
| T | 47 | 17 | 40 | 70 |
| $H_2O$ T | 665 | 724 | 650 | 720 |
| Festkörper | 42,0 | 40,9 | 41,8 | 41,1 |

Tabelle 1 (Fortsetzung)

| | Beispiel 16 | 17 | 18 | 19 |
|---|---|---|---|---|
| Anhydridgemisch a) | Tetrahydrofurantetracarbonsäuredianhydrid | | | |
| Säurezahl in $H_2O$ | 1143 | 550 | 491 | 553 |
| T | 100 | 100 | 350 | 100 |
| Lösungsmittel | MEK | | MEK | Ac |
| T | 150 | — | 400 | 30 |
| OH-Polymer $C_1$) | Polyester | Polyacrylat | Silikonpolyester | Polyacrylat |
| OH-Zahl | 85,6 | 125 | 77 | 125 |
| T | 262,3 | 109 | 567,4 | 109 |
| $H_2O/T$ | 15 | 16 | 36 | 11 |
| Katalysator | Tripropylamin | DABO | Li-Acetat | Triäthylamin |
| T | 0,75 | 1,2 | 1,7 | 0,3 |
| Anfangs-SZ $H_2O$ | 202 | 208 | 146,6 | 199 |
| End-SZ 1 n-Butanol | 195 | 199 | 152 | 188,5 |
| Epoxydverbindung $C_2$) | A | B | H | I |
| EP-Zahl | 8,70 | 6,13 | 19,0 | 7,3 |
| T | 228 | 177 | 212,1 | 155,0 |
| End-SZ 2 n-Butanol | 98 | 83 | 83,4 | 83,0 |
| Salzbildner b) | DMAE | DMAE | DMAE | DMAE |
| T | 89 | 50 | 136,0 | 50,0 |
| $H_2O$ T | 1362 | 575 | 2173 | 576 |
| Festkörper % | 30,7 | 41,9 | 39,9 | 41,7 |

Tabelle 1 (Fortsetzung)

| | Beispiel 20 | 21 | 22 | 23 | 24 |
|---|---|---|---|---|---|
| Anhydridgemisch a) | | | | | |
| Säurezahl in $H_2O$ | | 498 | 498 | 520 | 498 |
| T | | 100 | | 200 | 300 |
| Lösungsmittel | Pentanon-2 | EA-Ac (1 : 2) | — | AC | MEK |
| T | | 128 | — | 350 | 400 |
| OH-Polymer $C_1$) | OH-Polyester | OH-Polyester | Polyacrylat | — | OH-Polyester |
| CH-Zahl | 125 | 62,5 | 53 | — | 108,5 |
| T | 218 | 199,2 | 233 | — | 1381,0 |
| $H_2O$/T | 36 | 9,0 | 7 | 20 | 30 |
| Katalysator | — | Trimethylamin (40%ig i. $H_2O$) | — | Tributylamin/Ameisensäure (1 : 1) | Li-Benzoat |
| T | — | 0,7 | — | 1,5 | 2,0 |
| Anfangs-SZ $H_2O$ | 183,4 | 149,8 | 116,5 | — | — |
| End-SZ n-Butanol | 185,0 | 143 | 120 | 505 | 76 |
| Epoxydverbindung $C_2$) | J | K | A/B (1 : 1) | B | — |
| EP-Zahl | 12,3 | 8,8 | 7,4 | 6,3 | |
| T | 190,0 | 139,0 | 150 | 450 | — |
| End-SZ 2 n-Butanol | 93 | 79,6 | 63 | 107 | 76 |
| Salzbildner b) n-Butanol | DMAE | DMAE | DMAP | Triäthylamin | DMAE |
| T | 70,5 | 39 | 50 | 125 | 215 |
| $H_2O$ T | 1020 | 658 | 960 | 1750 | 4035 |
| Festkörper % | 41,6 | 42,4 | 36,3 | 30,7 | 32,3 |

Tabelle 2

| | Beispiel Nr. 1 | 2 | 3 | 4 | 5 | 6 | 7 | 8 | 9 | 10 | 11 |
|---|---|---|---|---|---|---|---|---|---|---|---|
| **Pendelhärte n. König (s)** | | | | | | | | | | | |
| 14 Tg. RT | — | 63 | 70 | 85 | 92 | — | — | — | — | — | — |
| 30 min 140° C | 214 | 180 | 185 | 192 | 204 | 212 | 170 | 147 | 137 | 191 | 92 |
| 90 s 280° C | — | — | — | — | — | 222 | — | — | — | 193 | — |
| **Glanz n. Lange 60°** | | | | | | | | | | | |
| 14 Tg. RT | — | 91 | 86 | 84 | 85 | — | — | — | — | — | — |
| 30 min 140° C | 88 | 93 | 87 | 86 | 87 | 40 | 90 | 87 | 91 | 91 | 20 |
| 90 s 280° C | — | — | — | — | — | 30 | — | — | — | 91 | — |
| **Beständigkeit gegen Xylol (min)** | | | | | | | | | | | |
| 14 Tg. RT | — | 3 | 1 | 1 | 1 | — | — | — | — | — | — |
| 30 min 140° C | > 120 | 120 | 5 | 25 | 45 | 90 | 7 | 5 | 5 | 10 | 15 |
| 90 s 280° C | — | — | — | — | — | > 120 | — | — | — | 8 | — |
| **Beständigkeit gegen Wasser (min)** | | | | | | | | | | | |
| 14 Tg. RT | — | 15 | 12 | 17 | 22 | — | — | — | — | — | — |
| 30 min 140° C | > 1200 | 180 | 70 | 120 | > 1200 | > 120 | > 1200 | > 120 | 5 | 500 | 120 |
| 90 s 280° C | | — | — | — | — | > 120 | — | — | — | 600 | — |
| **Gitterschnitt** | | | | | | | | | | | |
| 14 Tg. RT | — | 0 | 0 | 0 | 0 | — | — | — | — | — | — |
| 30 min 140° C | 0 | 0 | 0 | 0 | 0 | 0 | 2 | 0 | 1 | 1 | 0 |
| 90 s 280° C | — | — | — | — | — | 0—1 | — | — | — | 2 | — |
| **Schlagtiefung** | | | | | | | | | | | |
| 14 Tg. RT | — | 40 | 20 | 30 | 40 | — | — | — | — | — | — |
| 30 min 140° C | 4 | 80 | 48 | 68 | 120 | 60 | 4 | 120 | 60 | 4 | 40 |
| 90 s 280° C | — | — | — | — | — | 48 | — | — | — | 4 | — |
| **Erichsentiefung** | | | | | | | | | | | |
| 14 Tg. RT | — | 7,5 | 5,8 | 6,5 | 7,2 | 9,6 | — | — | — | — | — |
| 30 min 140° C | 8,1 | 8,6 | 8,2 | 8,7 | 9,1 | 8,5 | 2,9 | 10,0 | 6,8 | 4,5 | 9,0 |
| 90 s 280° C | — | — | — | — | | | — | — | — | 4,1 | — |

Tabelle 2 (Fortsetzung)

| | Beispiel Nr. 12 | 13 | 14 | 15 | 16 | 17 | 18 | 19 | 20 | 21 | 22 |
|---|---|---|---|---|---|---|---|---|---|---|---|
| Pendelhärte n. König (s) | | | | | | | | | | | |
| 14 Tg. RT | — | — | — | — | — | — | — | — | — | — | — |
| 30 min 140° C | 205 | 141 | 198 | 172 | 134 | 89 | 210 | 140 | 225 | 180 | 140 |
| 90 s 280° C | — | 146 | — | — | — | — | — | 170 | — | 190 | 145 |
| Glanz n. Lange 60° | | | | | | | | | | | |
| 14 Tg. RT | — | — | — | — | — | — | — | — | — | — | — |
| 30 min 140° C | 90 | 89 | 92 | 83 | 83 | 81 | 83 | 92 | 80 | 85 | 88 |
| 90 s 280° C | — | 87 | — | — | — | — | — | 88 | — | 87 | 89 |
| Beständigkeit gegen Xylol (min) | | | | | | | | | | | |
| 14 Tg. RT | — | — | — | — | — | — | — | — | — | — | — |
| 30 min 140° C | > 120 | 3 | 180 | 150 | 1 | 1 | > 120 | 5 | > 120 | 20 | 7 |
| 90 s 280° C | — | 2 | — | — | — | — | — | 3 | — | 25 | 6 |
| Beständigkeit gegen Wasser (min) | | | | | | | | | | | |
| 14 Tg. RT | — | — | — | — | — | — | — | — | — | — | — |
| 30 min 140° C | > 1200 | 300 | 600 | > 120 | 16 | 40 | > 120 | > 1200 | > 1200 | > 1200 | 600 |
| 90 s 280° C | — | 250 | — | — | — | — | — | > 1200 | — | > 1200 | 480 |
| Gitterschnitt | | | | | | | | | | | |
| 14 Tg. RT | — | — | — | — | — | — | — | — | — | — | — |
| 30 min 140° C | 1 | 0 | 0—1 | 0 | 0 | 0 | 2 | 0 | 2 | 0 | 0 |
| 90 s 280° C | — | 0 | — | — | — | — | — | 0 | — | 0 | 0 |
| Schlagtiefung | | | | | | | | | | | |
| 14 Tg. RT | — | — | — | — | — | — | — | — | — | — | — |
| 30 min 140° C | 4 | 160 | 4 | 20 | 10 | 160 | 4 | 80 | 4 | 80 | 84 |
| 90 s 280° C | — | 140 | — | — | — | — | — | 76 | — | 60 | 72 |
| Erichsentiefung | | | | | | | | | | | |
| 14 Tg. RT | — | — | — | — | — | — | — | — | — | — | — |
| 30 min 140° C | 5,6 | 9,2 | 6,1 | 7,0 | 6,5 | 9,8 | 4,9 | 9,2 | 4,8 | 7,5 | 7,5 |
| 90 s 280° C | — | 8,4 | — | — | — | — | — | 8,3 | — | 8,2 | 7,8 |

Tabelle 2 (Fortsetzung)

| | Beispiel Nr. 23 | 24 | 25 | 26 | 27 | 28 | 29 | 30 | 31 |
|---|---|---|---|---|---|---|---|---|---|
| Pendelhärte n. König (s) | | | | | | | | | |
| 14 Tg. RT | — | — | 81 | — | — | 110 | — | — | — |
| 30 min 140°C | 60 | 210 | 200 | 114 | 180 | — | 220 | 190 | 185 |
| 90 s 280°C | 66 | 210 | — | — | — | — | 230 | — | — |
| Glanz n. Lange 60° | | | | | | | | | |
| 14 Tg. RT | — | — | 87 | — | — | 88 | — | — | — |
| 30 min 140°C | 92 | 88 | 91 | 92 | 86 | — | 93 | 92 | — |
| 90 s 280°C | 90 | 86 | — | — | — | — | 94 | — | — |
| Beständigkeit gegen Xylol (min) | | | | | | | | | |
| 14 Tg. RT | — | — | <1 | — | — | >120 | — | — | — |
| 30 min 140°C | <1 | >120 | 8 | 2 | >120 | — | >120 | >120 | 8 |
| 90 s 280°C | 1 | >120 | — | — | — | — | >120 | — | — |
| Beständigkeit gegen Wasser (min) | | | | | | | | | |
| 14 Tg. RT | — | — | 17 | — | — | 200 | — | — | — |
| 30 min 140°C | 60 | 100 | >120 | >120 | 500 | — | >1200 | >1200 | 400 |
| 90 s 280°C | 60 | 120 | — | — | — | — | >1200 | — | — |
| Gitterschnitt | | | | | | | | | |
| 14 Tg. RT | — | — | 0 | — | — | — | — | — | — |
| 30 min 140°C | 0 | 2 | 0 | 0 | 1 | 0 | 0 | 0—1 | 1 |
| 90 s 280°C | 0 | 2—3 | — | — | — | — | 0 | — | — |
| Schlagtiefung | | | | | | | | | |
| 14 Tg. RT | — | — | 4 | — | — | 0 | — | — | — |
| 30 min 140°C | 160 | 4 | 4 | 80 | 0 | — | 20 | 8 | 4 |
| 90 s 280°C | 160 | 4 | — | — | — | — | 28 | — | — |
| Erichsentiefung | | | | | | | | | |
| 14 Tg. RT | — | — | 6,8 | — | — | 6,8 | — | — | — |
| 30 min 140°C | 10,5 | 6,8 | 8,2 | 8,7 | 6,2 | — | 7,5 | 7,0 | 5,5 |
| 90 s 280°C | 10,4 | 5,4 | — | — | — | — | 7,3 | — | — |

## IV) Verwendung der Bindemittel für Klebstoffe

### IVa) Herstellung des reaktiven Bindemittels A

A1) Man geht aus von einem Polyester aus Phthalsäureanhydrid, Neopentylglykol und Trimethylolpropan (Molverhältnis 1 : 1 : 0,05) mit einer OH-Zahl von 70, der mit einem Bisanhydrid aus Äthylenglykol und 2 Mol Trimellithsäureanhydrid nach dem oben beschriebenen Verfahren umgesetzt wird. Anschließend wird hydrolysiert und das so erhaltene Hydrolyseprodukt (in Form einer polymeren Carbonsäure) mit epoxydiertem Sojaöl partiell umgesetzt, so daß noch 70% der COOH-Gruppen frei vorliegen. Diese werden darauf mit Ammoniak zu einem Produkt mit einem pH-Wert von etwa 7,5 neutralisiert.

A2) Es wird gearbeitet wie nach Beispiel A1), jedoch wird zur Neutralisation der COOH-Gruppen statt Ammoniak nunmehr Trimethylamin verwendet zur Bildung eines Produktes mit einem pH-Wert von etwa 7,4.

A3) Es wird gearbeitet wie nach Beispiel A1), jedoch wird anstelle des epoxydierten Sojaöls nunmehr ein Gemisch von epoxydiertem Leinöl und epoxydiertem Sojaöl im Gewichtsverhältis 1 : 2 eingesetzt. Zur Neutralisation verwendet man eine Mischung aus 70 Gew.-% Ammoniak und 30 Gew.-% Trimethylamin. Man erhält ein Produkt mit einem pH-Wert von 7,0.

IVb) Herstellung der Klebstoffe

32) Eine 700 T Feststoff enthaltende Menge einer wäßrigen Dispersion eines 2-Chlorbutadien-Polymerisats wird mit einer 300 T Feststoff enthaltenden Menge eines Hydrosols aus wasserlöslichem, reaktivem Bindemittel A1) unter Zusatz von 0,2% eines Entschäumers in Form eines höheren Alkohols mit 8 C-Atomen durch intensives Rühren gemischt. Der so erhaltene Klebstoff wird anschließend in dünner Schicht auf kurz vorher aufgerauhte und abgebürstete, 2 cm breite Prüfkörper aus Sohlengummi gestrichen. Gleich danach werden diese Prüfkörper nebeneinander unter eine 250-Watt-Rotlichtlampe im Abstand von ca. 14 cm mit einer Schichtseite zur Lampe gelegt und 10 Minuten lang bestrahlt. Der Prüfkörper hat dabei eine Temperatur von 100 bis 110° C. Dann werden die Prüfkörper mit ihren noch heißen Klebstoffschichten zusammengelegt und unter einer Presse mit einem Druck von 0,3 mPa 20 s lang gepreßt.

33) Beispiel 32 wird wiederholt mit dem Unterschied, daß die wäßrige, kolloidale Elastomer-Dispersion zur Hälfte aus einer wäßrigen Dispersion eines 2-Chlorbutadien-Polymerisats und zur Hälfte aus einer wäßrigen Dispersion eines 2-Chlorbutadien-Methacrylsäure-Copolymerisats besteht.

34) Beispiel 33 wird wiederholt mit dem Unterschied, daß die Klebstoffmischung vor ihrer Anwendung 4 Tage auf 60° C erwärmt wird.

35) Beispiel 34 wird wiederholt mit dem Unterschied, daß das Verhältnis des 2-Chlorbutadien-Homopolymerisats zum Copolymerisat in der Dispersion 75 : 25 beträgt.

36) und 37) Beispiele 34 und 35 werden wiederholt mit dem Unterschied, daß der Feststoffanteil des reaktiven Bindemittels 10% vom Gesamtfeststoff beträgt.

38) Beispiel 37 wird wiederholt mit dem Unterschied, daß das Verhältnis des 2-Chlorbutadien-Homopolymerisats zum Copolymerisat in der Dispersion 25 : 75 beträgt.

39) Beispiel 32 wird wiederholt mit dem Unterschied, daß die wäßrige Dispersion aus einem Acrylat-Copolymerisat aus 70% Äthylhexylacrylat, 20% Butylacrylat und 10% Acrylnitril besteht.

40) Beispiel 39 wird wiederholt mit dem Unterschied, daß der Feststoffanteil des reaktiven Bindemittels 10% des Gesamtfeststoffs beträgt.

41) Beispiel 40 wird wiederholt mit dem Unterschied, daß die eingesetzte wäßrige Acrylat-Dispersion aus einem Copolymerisat von 61% Äthylacrylat, 22% Octylacrylat, 10% Acrylnitril und 7% Acrylsäure besteht.

42) Beispiel 41 wird wiederholt mit dem Unterschied, daß die Klebstoffmischung vor ihrer Anwendung 2 Tage lang auf 60° C erwärmt wird.

Sämtliche Beispiele lassen sich auch mit den Bindemitteln A2 und A3 durchführen, wobei man Klebstoffe mit gleich günstigen Eigenschaften erhält.

V) Klebstoff-Prüfung

Die nach den Beispielen 32 bis 42 hergestellten Verklebungen wurden nach einer Lagerung von 7 Tagen bei Raumtemperatur auf Wärmestandfestigkeit geprüft. Dazu wurden sie in einem Wärmeschrank auf 70° C vortemperiert und nach Erreichen dieser Temperatur mit einem Schenkel an eine an der Decke des Schrankes angebrachte Klammer befestigt, während der andere Schenkel der Verklebung mit einem auf 70° C vortemperierten 300 g schweren Gewicht so belastet wurde, daß auf die Klebefuge im Winkel von 180° ein senkrechter Zug wirkte.

Tabelle 3 gibt die Wärmestandfestigkeit für die einzelnen Verklebungsbeispiele im Vergleich zu Festigkeitswerten von Verklebungen mit wäßrigen Kontaktklebern aus herkömmlichen Harzen wieder.

Tabelle 3

| Beispiel | Anfangsschälfestigkeit (N · cm$^{-1}$) | Wärmestandfestigkeit nach 7 Tagen/Raumtemperatur (Min./cm) |
|---|---|---|
| 32 | 40—50 | 20 |
| 33 | 40—50 | 40 |
| 34 | 50—60 | 140 |
| 35 | 50—60 | 280 |
| 36 | 70—80 | 420 |
| 37 | 90—100 | 840 |
| 38 | 70—80 | 600 |
| 39 | 40—50 | 30 |
| 40 | 50—60 | 120 |
| 41 | 60—70 | 260 |
| 42 | 70—80 | 480 |
| Wäßrige Kontaktkleber aus herkömmlichen Harzen | | 5—40 |

In Tabelle 4 werden die maximalen Anfangsschälfestigkeiten von Gummi/Gummi-Klebungen, die man mit Kontaktklebern aus Poly-2-chlorbutadien- oder Polyacrylat-Dispersionen und den bisher benutzten Harzen erreichen kann, aufgeführt.

Tabelle 4

| Harz | Anfangschälfestigkeit (N · cm$^{-1}$) |
|---|---|
| Alkylphenolharze | 20—30 |
| Terpenphenolharze | 30—40 |
| Polyterpenharze | 20—30 |
| Kolophoniumharze | 30—40 |
| Cumaron/Inden-Harze | 30—40 |
| Kohlenwasserstoffharze | 20—30 |

VI) Diskussion der Ergebnisse

Wie aus Tabellen 3 und 4 hervorgeht, sind die Klebstoffe mit der erfindungsgemäßen Verwendung der reaktiven Bindemittel den Klebstoffen unter Verwendung herkömmlicher Harze, die aber dieselben Elastomeren- bzw. Polyacrylat-Dispersionen enthalten, in bezug auf Wärmestandfestigkeit und Anfangsschälfestigkeit weit überlegen.

Formelblatt

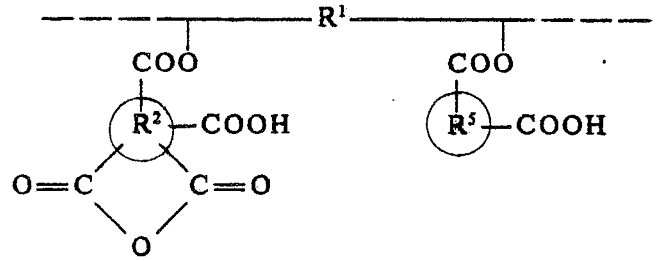

(I)

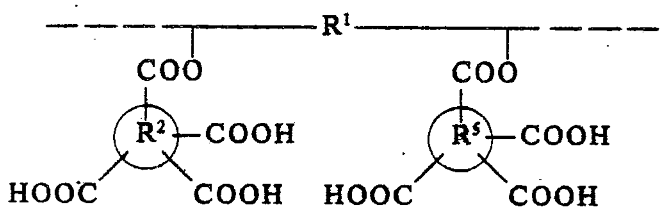

(Ia)

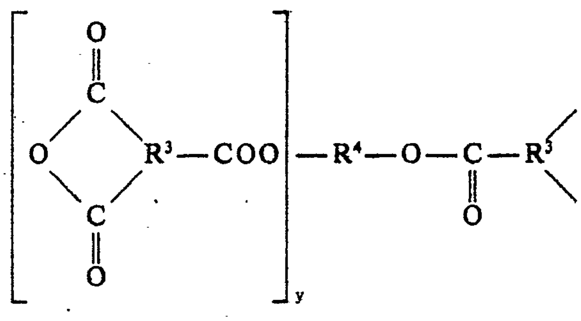

(II)

y = 1–4

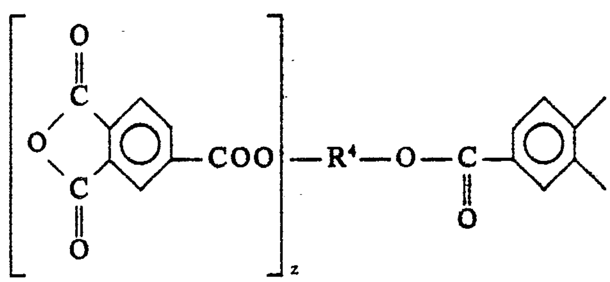

(IIa)

z = 1,2

$R^2$ =

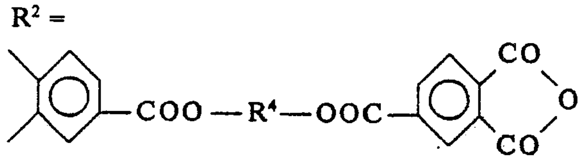

(IIb)

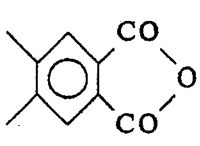

(III)

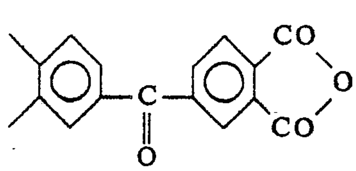

(IV)

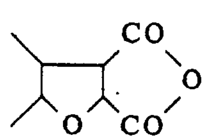

(V)

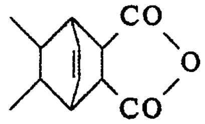

(Va)

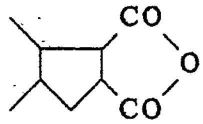

(Vb)

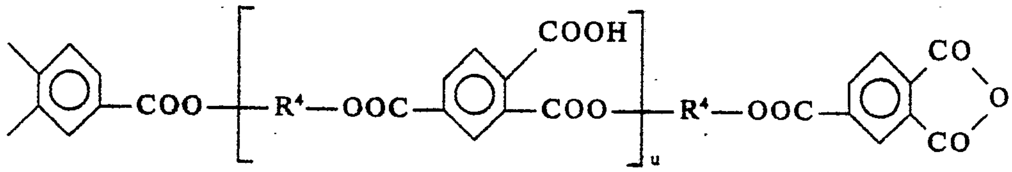

(VI)

u = 1–8

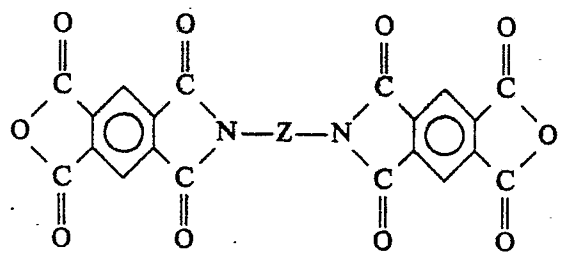

(VII)

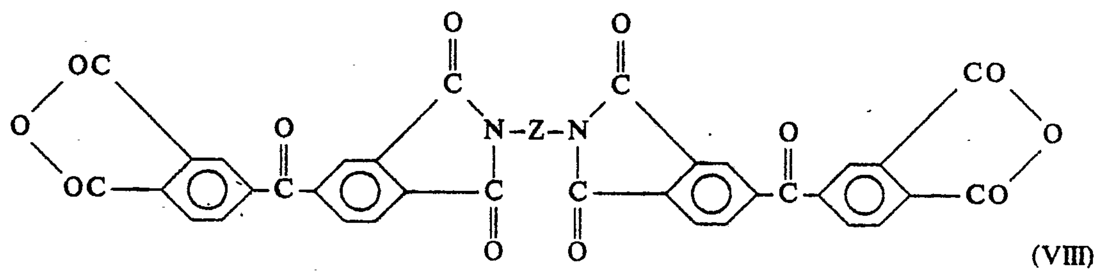

(VIII)

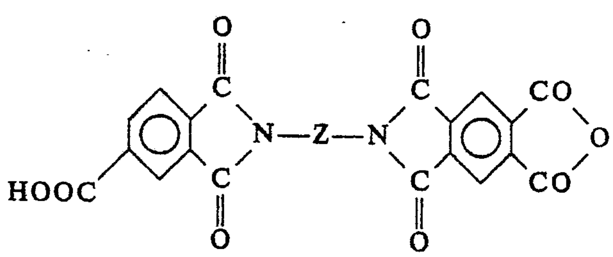

(IX)

Z = $-(CH_2)_{\overline{m}}-$ m = 2–8

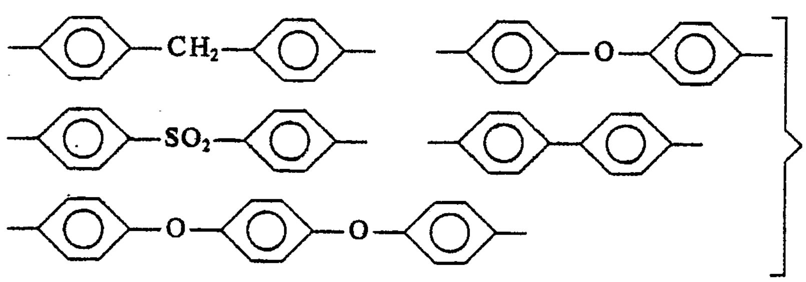

(X)

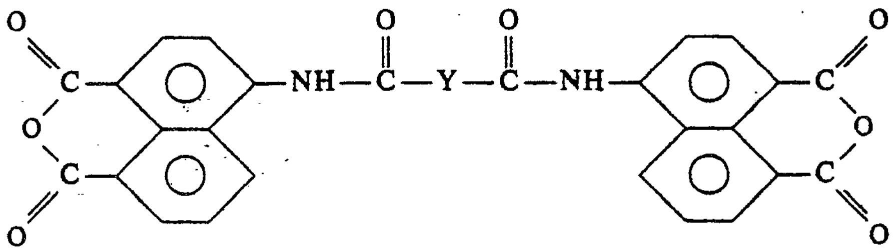

(XI)

Y = 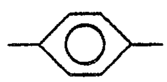 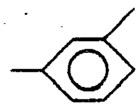 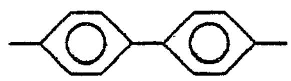

(XII)

$= (CH_2)_p \quad p = 2-8$

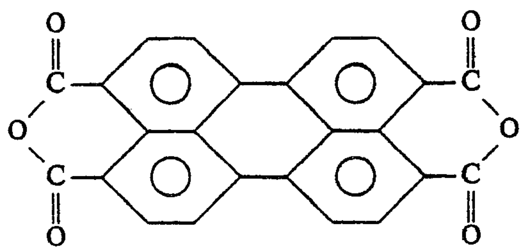

(XIII)

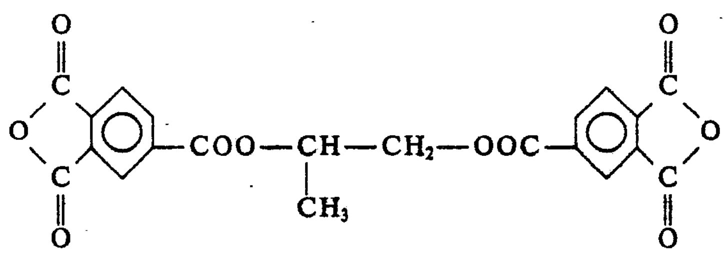

(XIV)

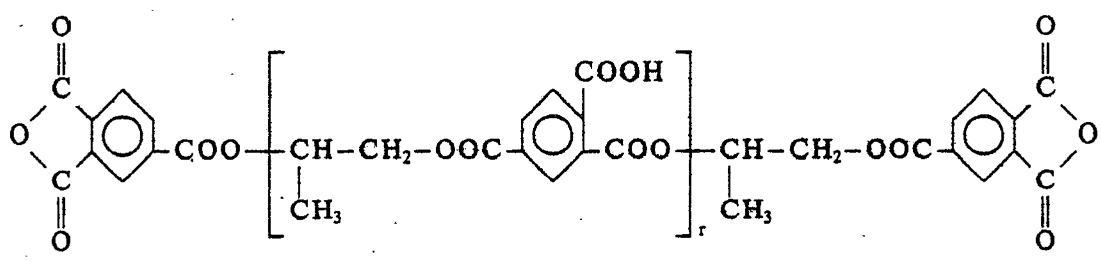

$r = 1-8$

(XV)

$R^4$ = 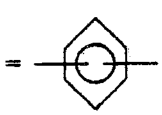 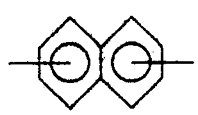 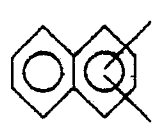 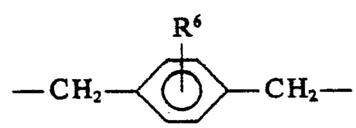

(XVI) (XVII) (XVIII) (XIX)

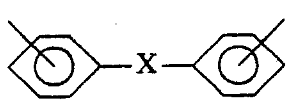 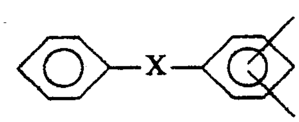

(XX) (XXI)

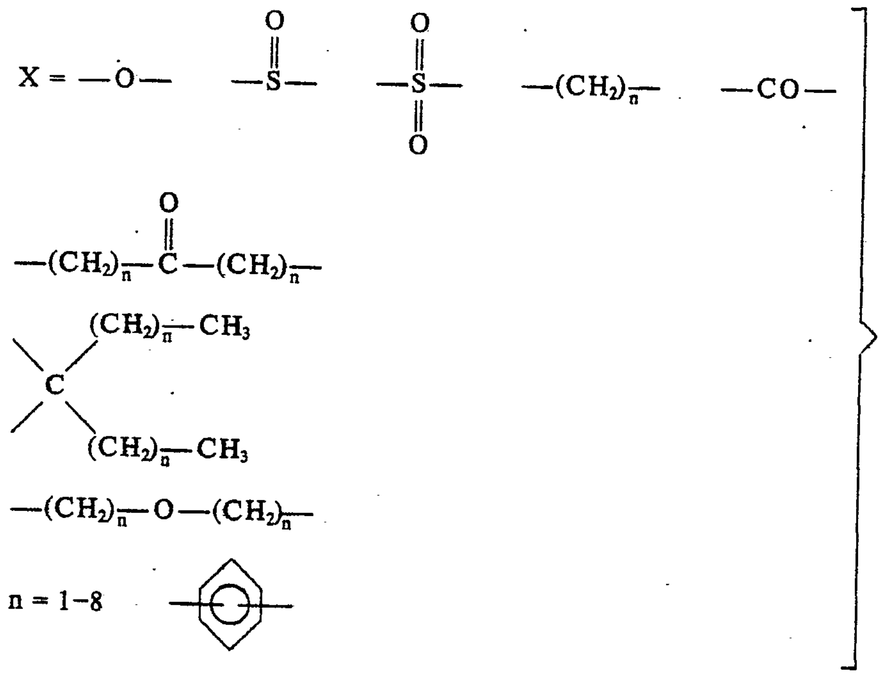

(XXII)

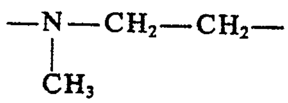

$-[O-CH_2-CH_2]_2-O-$

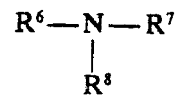

(XXIII) (XXIV) (XXV)

**Patentansprüche**

1. Wasserlösliches reaktives Bindemittel, gekennzeichnet durch eine Kombination von mindestens drei der Komponenten

a) halogenfreie cyclische Polycarbonsäureverbindungen,
b) salzbildende Substanzen der Gruppe Alkali-, Erdalkaliverbindungen, Zink- und Aluminiumverbindungen, organische Basen und/oder Ammoniak,
c1) OH-Gruppen enthaltende Polymere, die den Rest $R^1$ bilden können und/oder
c2) Epoxydverbindungen,

wobei die Anwesenheit der Komponente a) und b) zwingend ist und die Komponenten a) bis c2) als solche oder zumindest teilweise in chemisch gebundener Form vorliegen und, sofern die Komponenten a) und c1) in chemisch gebundener Form vorliegen, diese Form mindestens einem Reaktionsprodukt der Formel

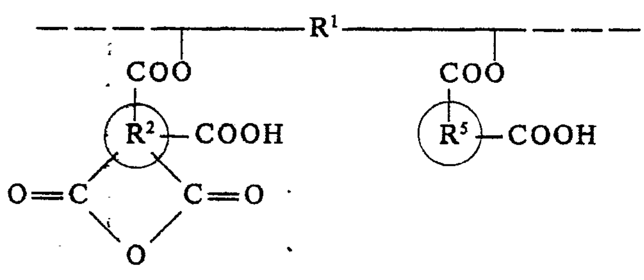

(I)

oder

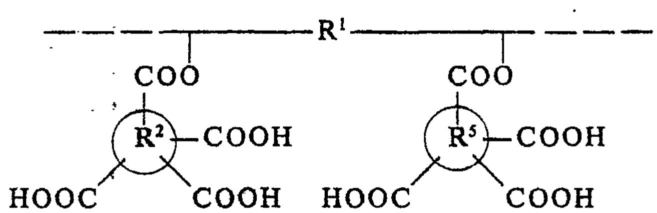

(Ia)

entspricht, worin

$R^1$ den Rest mindestens eines OH-Gruppen enthaltenden Polymeren der Gruppe Polyester, Polymerisate, beide mit einer OH-Zahl von jeweils 20 bis 300, und Phenolharze mit einer OH-Zahl von 100 bis 800 und/oder den Rest einer Epoxydverbindung,
$R^2$ den Rest einer mindestens vierbasischen Carbonsäure mit einer in o-Stellung zur Esterbindung befindlichen COOH-Gruppe,
$R^5$ den Rest einer mindestens zweibasischen Carbonsäure mit einer in o-Stellung zur Esterbindung befindlichen COOH-Gruppe, wobei $R^5$ auch dieselbe Bedeutung wie $R^2$ haben kann,

bedeuten, wobei die Anhydridgruppen in Formel (I) bzw. (Ia) zumindest teilweise durch COOH- und/oder Estergruppen und die COOH-Gruppen zumindest teilweise durch Estergruppen ersetzt sein können und wobei die freien COOH-Gruppen in einem Anteil von mehr als 20 und bis 100% in Form eines Salzes der Komponente b) vorliegen.

2. Bindemittel nach Anspruch 1, dadurch gekennzeichnet, daß es in Form einer wäßrigen Lösung vorliegt.

3. Bindemittel nach Anspruch 1 oder 2, dadurch gekennzeichnet, daß die den Rest $R^1$ bildenden Polymeren der Gruppe Polyester und Polymerisate eine OH-Zahl von 40 bis 220 und die Phenolharze eine solche von 150 bis 300 haben.

4. Bindemittel nach einem oder mehreren der Ansprüche 1 bis 3, dadurch gekennzeichnet, daß es neben dem Reaktionsprodukt der Formel (I) bzw. (Ia) noch nicht umgesetzte Einheiten mindestens einer der Komponenten a) bis c2) enthält.

5. Bindemittel nach einem oder mehreren der Ansprüche 1 bis 4, dadurch gekennzeichnet, daß es neben dem Reaktionsprodukt (I) bzw. (Ia) zusätzlich noch mindestens eine der folgenden Substanzen enthält:

1) eine nicht an eine Polymeren- oder Kondensationsharzkette oder an eine Epoxydverbindung gebundene Polycarbonsäure mit der Gruppierung gemäß einer der Formeln

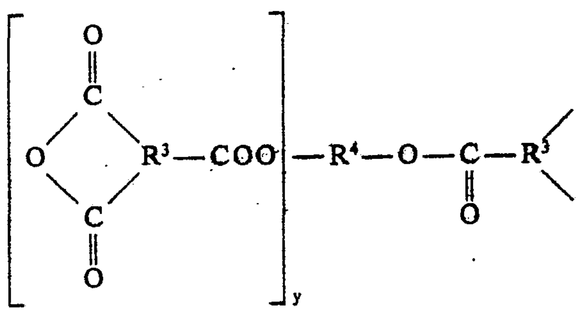

(II)

y = 1–4

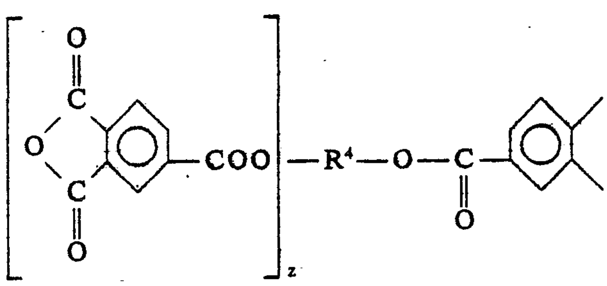

(IIa)

z = 1 oder 2

$R^2$ =

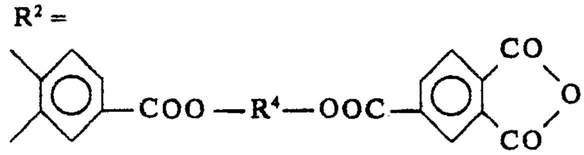

(IIb)

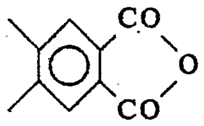

(III)

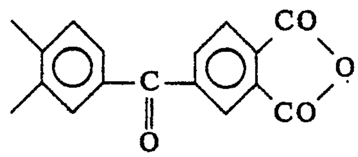

(IV)

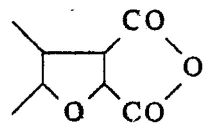

(V)

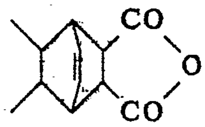

(Va)

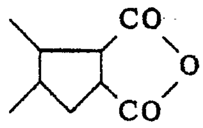

(Vb)

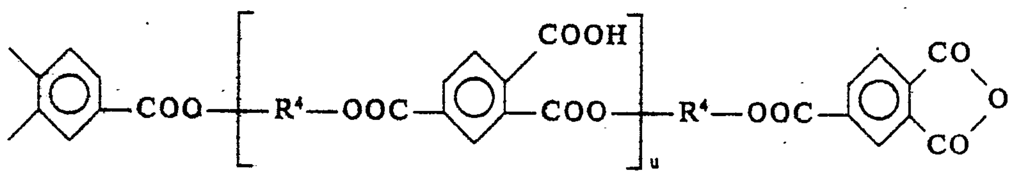

(VI)

u = 1–8

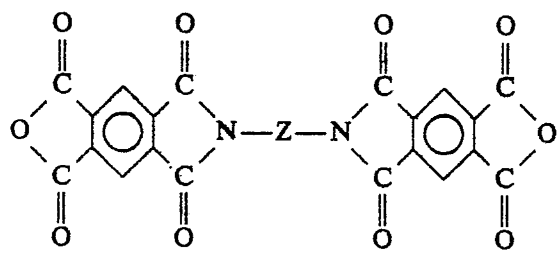

(VII)

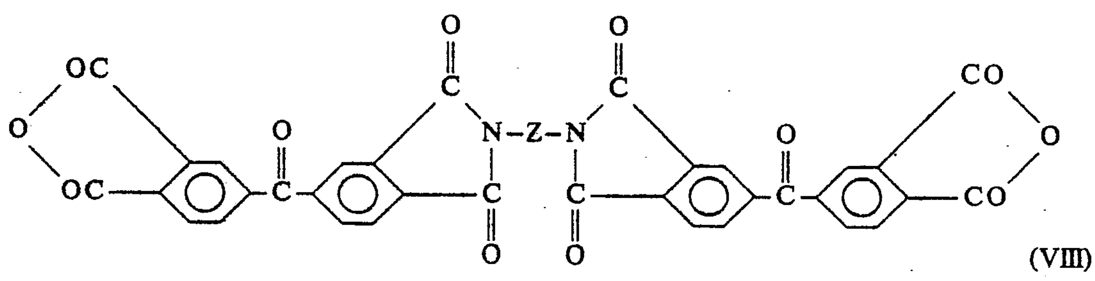

(VIII)

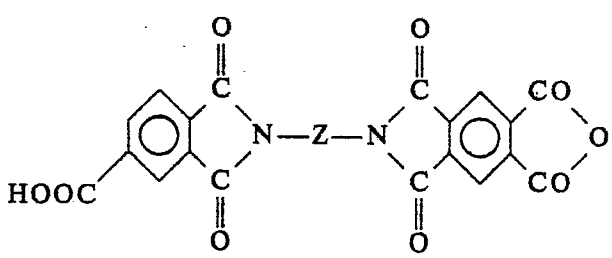

(IX)

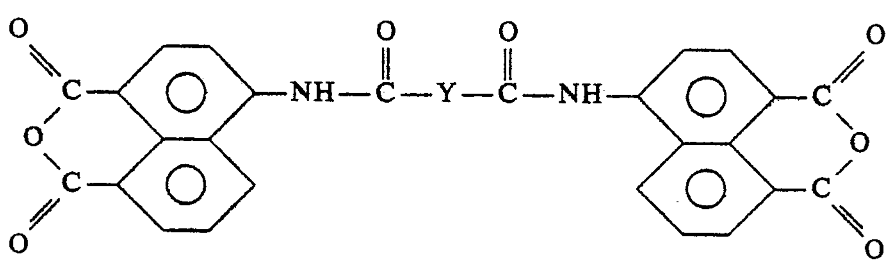

(XI)

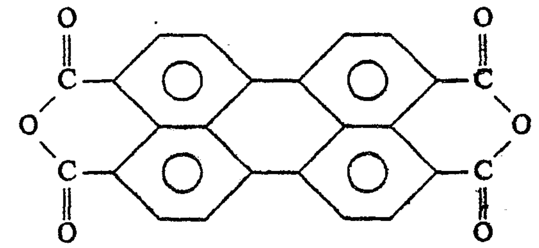

(XIII)

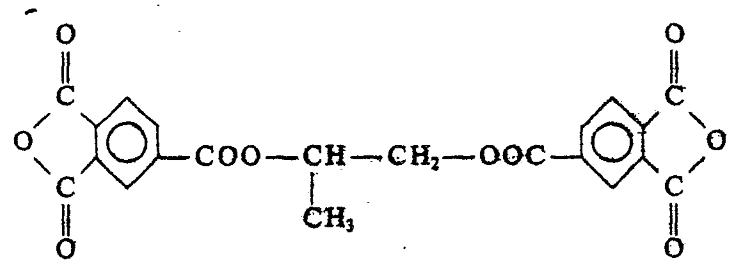

(XIV)

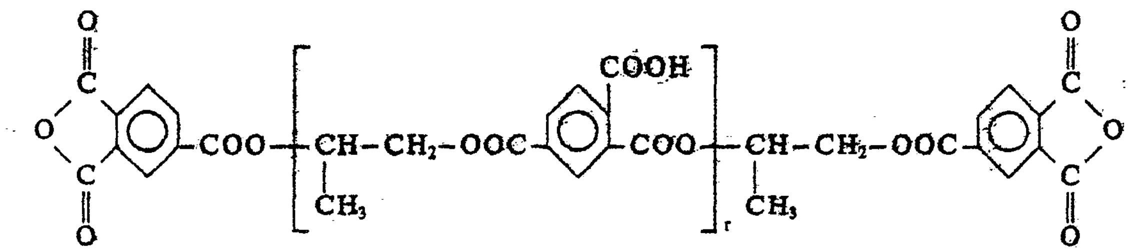

r = 1–8 (XV)

jedoch in mindestens teilweise hydrolysierter bzw. in Salzform und/oder Trimellitsäure;

2) ein wärmehärtbares Kunstharz der Gruppe Melaminharz und Harnstoffharz jeweils einzeln oder im Gemisch in einem Anteil von bis zu 30, vorzugsweise bis zu 15 Gew.-% des Gesamtfestkörpergehaltes;

3) einen Katalysator in einem Anteil von bis zu 5, vorzugsweise 0,01 bis 0,5 Gew.-%, bezogen auf Festkörpergehalt;

4) eine wäßrige Dispersion eines Thermoplasten, gegebenenfalls zusammen mit Dispersionshilfsmitteln, wobei in obiger Formel (XI)

Y einen Rest $-(CH_2)_p-$ (worin p = 2 bis 8 ist) oder

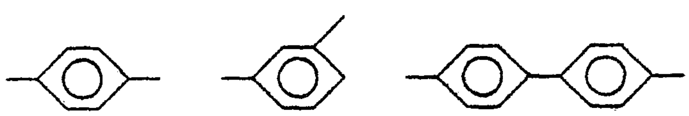

(XII)

und in Formeln (VII) bis (IX)

Z einen Rest $-(CH_2)_m-$ (worin m = 2 bis 8 ist) oder

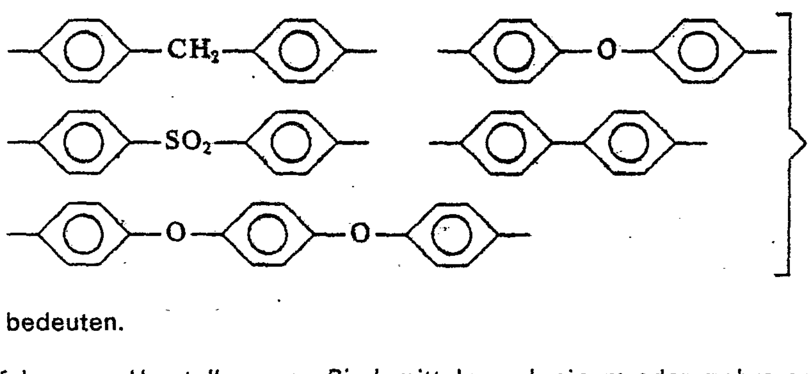

(X)

bedeuten.

6. Verfahren zur Herstellung von Bindemitteln nach einem oder mehreren der Ansprüche 1 bis 5, dadurch gekennzeichnet, daß gleichzeitig oder in beliebiger Reihenfolge in mindestens einer Stufe

a) eine halogenfreie cyclische Polycarbonsäureverbindung und

b) eine mit COOH-Gruppen ein Salz bildende Substanz der Gruppe Alkali-, Erdalkali-Verbindungen,

Zink- und Aluminiumverbindungen, organische Basen und/oder Ammoniak mit
c1) einem OH-Gruppen enthaltenden Polymeren, das den Rest $R^1$ bilden kann, und/oder
c2) einer Epoxydverbindung,

unter Bildung von Reaktionsprodukten der Formel (I) bzw. (Ia) umgesetzt werden, wobei etwa vorhandene Anhydridgruppen in einer beliebigen Verfahrensstufe, spätestens während der Salzbildung, hydrolysiert werden.

7. Verwendung der Bindemittel nach einem oder mehreren der Ansprüche 1 bis 5 bzw. der nach dem Verfahren gemäß Anspruch 6 hergestellten Bindemittel zur Herstellung von Überzugsschichten.

8. Verwendung nach Anspruch 7 zur Herstellung von bei 0 bis 350, vorzugsweise 10 bis 220°C gehärteten Produkten.

9. Verwendung der Bindemittel nach einem oder mehreren der Ansprüche 1 bis 5 als Komponente A) zusammen mit einer wäßrigen Kunststoffdispersion eines zusätzlichen Polymerisationsharzes B) für mit Wasser verdünnbare Klebstoffe, dadurch gekennzeichnet, daß sie als zusätzliche Komponente B) mindestens ein Polymerisationsharz B1) eines gegebenenfalls zumindest teilweise mit COOH- und/oder Sulfonsäuregruppen modifizierten Elastomeren und/oder B2) eines Acryl Copolymerisats enthalten, wobei der Anteil des reaktiven Bindemittels A) 5 bis 40 Gew.-% und derjenige der Komponente B) 60 bis 95 Gew.-%, jeweils bezogen auf den Gesamtfestkörpergehalt, ausmacht.

10. Verwendung nach Anspruch 9, dadurch gekennzeichnet, daß die Komponente B1) zu einem überwiegenden Anteil aus einem Chlorbutadien-Polymerisat, das gegebenenfalls zumindest teilweise mit COOH-Gruppen modifiziert ist, und die Komponente B2) vorwiegend aus einem Acryl-Copolymerisat besteht und daß der Rest $R^1$ in Formel (I) bzw. (Ia) der Rest eines verzweigten Polyesters auf Basis mindestens einer Dicarbonsäure, mindestens eines aliphatischen Diols und mindestens eines Triols ist, daß die freien COOH-Gruppen am Rest $R^2$ und/oder $R^5$ teilweise mit mehrwertigem Alkohol verestert sind und die restlichen Anhydrid- bzw. COOH-Gruppen in Form eines quartären Ammoniumsalzes vorliegen und daß die Epoxydverbindung c2) in Form eines epoxydierten Fettsäureesters vorliegt.

**Claims**

1. A water-soluble reactive binding agent, characterized by a combination of at least 3 of the components

a) halogen free cyclic polycarboxylic acid compounds,
b) salt-forming substances of the group alkali compounds, alkaline earth metal compounds, zinc compounds and aluminium compounds, organic bases and/or ammonia,
$c_1$) OH-groups containing polymers which may form the residue $R^1$ and/or
$c_2$) epoxy compounds,

the presence of components a) and b) being compulsory and the components a) to $c_2$) being present per se or at least in part in a chemically bonded form and, if components a) to $c_1$) are present in chemically bonded form, this form corresponds to at least one reaction product of the formula (I) or (Ia) (cf. formulae in the German version), wherein

$R^1$ represents a group derived from at least one polymer containing OH-groups selected from the group of polyesters and polymers, each with an OH number of 20 to 300, and phenolic resins with an OH number of 100 to 800, and/or represents a group derived from an epoxy compound,
$R^2$ represents a group derived from an at least tetrabasic carboxylic acid with a COOH-group in the o-position relative to the ester bond,
$R^5$ represents a group derived from an at least dibasic carboxylic acid with a COOH group in the o-position relative to the ester bond, wherein $R^5$ may have the same meaning as $R^2$,

wherein the anhydride groups in formula (I) or (Ia) may be at least partially replaced by COOH and/or ester groups and the COOH groups may be replaced at least partially by ester groups and wherein the free COOH groups are present in an amount of more than 20 and up to 100% in the form of a salt of component b).

2. A binder as claimed in claim 1 characterized in that it is present in the form of an aqueous solution.

3. A binder as claimed in claim 1 or 2, characterized in that those polymers forming the group $R^1$ and being selected from the group of polyesters and polymers have an OH-number in the range from 40 to 220 and the phenolic resins have an OH number in the range from 150 to 300.

4. A binder as claimed in one or more of claims 1 to 3, characterized in that it contains in addition to the reaction product of the formula (I) or (Ia) units not yet reacted and selected from at least one of components a) to $c_2$).

5. A binder as claimed in one or more of claims 1 to 4, characterized in that it contains, in addition to the reaction product (I) or (Ia) at least one of the following substances:

i) a polycarboxylic acid not bonded to a polymeric or condensation resin chain or to an epoxide compound, having a grouping according to one of the formulae (cf. the German version) (II), wherein y is from 1 to 4, (IIa), wherein z is 1 or 2, (IIb), (III) to (Vb), (VI), wherein u is from 1 to 8, (VII) to (IX), (XI), (XIII) to (XV), wherein r is from 1 to 8, but in at least partially hydrolyzed form or at least partially in the form of a salt, and/or trimellitic acid;

ii) a thermosetting synthetic resin selected from the group of melamine resin and urea resin, either alone or in admixture, in an amount of up to 30, preferably up to 15% by weight of the total solids content;

iii) a catalyst in an amount of up to 5, preferably 0.01 to 0.5% by weight, referred to the solids content,

iv) an aqueous dispersion of a thermoplast, optionally together with dispersion adjuvants, wherein in the above formula (XI) Y is one of the groups $-(CH_2)_p-$ (wherein p is from 2 to 8) or

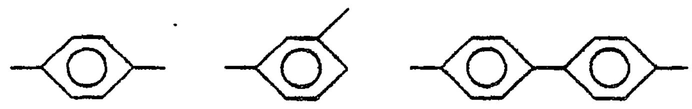

(XII)

and in formulae (VII) to (IX) Z is a group $-(CH_2)_m-$ (wherein m is from 2 to 8) or one of the formulae (X) (cf. the German version).

6. Process for the preparation of binders according to one or more of claims 1 to 5, characterized in that in at least one stage

a) a halogen-free cyclic polycarboxylic acid compound and
b) a substance forming a salt with COOH groups and being selected from alkali compounds, alkaline earth metal compounds, zinc compounds and aluminium compounds, organic bases and/or ammonia are reacted simultaneously or in any desired sequence with
$c_1$) a polymer containing OH groups which can form the group $R^1$, and/or
$c_2$) an epoxy compound

to form reaction products of formula (I) or (Ia) respectively, any anhydride groups present being hydrolysed at any desired stage of the process, but at the latest during the salt formation.

7. Use of the binders according to one or more of claims 1 to 5 or of the binders prepared by the process according to claim 6, for the preparation of coatings.

8. Use according to claim 7 for the preparation of products hardened at from 0 to 350, preferably from 10 to 220°C.

9. Use of the binder according to one or more of claims 1 to 5 as component A) together with an aqueous plastics dispersion of an additional polymerisation resin B) for adhesives which can be diluted with water, characterized in that they contain as an additional component B) at least one polymerisation resin B1) of an elastomer optionally modified at least partially with COOH and/or sulfonic acid groups, and/or B2) of an acrylic copolymer, wherein the proportion of the reactive binder A) is from 5 to 40% by weight, and the proportion of component B) is from 60 to 95% by weight, both referred to the total solids content.

10. Use according to claim 9, characterized in that the component B1) consists predominantly of a chlorobutadiene polymer which may optionally be at least partially modified with COOH groups, and component B2) consists predominantly of an acrylic copolymer, and wherein the group $R^1$ in formula (I) or (Ia) is the group of a branched polyester based on at least one dicarboxylic acid, at least one aliphatic diol and at least one triol, wherein the free COOH groups on the $R^2$ and/or $R^5$ group are partially esterified with polyhydric alcohol and the remaining anhydride or COOH groups are present in the form of a quaternary ammonium salt and in that the epoxy compound $c_2$) is present in the form of an epoxidised fatty acid ester.

**Revendications**

1. Liant réactif soluble dans l'eau, caractérisé en ce qu'il comprend une association d'au moins trois des composantes suivantes:

a) dérivés d'acides polycarboxyliques cycliques dépourvus d'halogène,
b) substances capables de former des sels et appartenant à l'ensemble constitué par les composés de métaux alcalins ou de métaux alcalino-terreux, les composés du zinc ou de l'aluminium, les bases organiques et l'ammoniac,
c1) polymères porteurs de radicaux —OH et capables de former le radical $R^1$, et/ou
c2) composés époxydiques,

la présence des composantes a) et b) étant obligatoire, les composantes a) à c2) se trouvant telles

quelles ou, au moins partiellement, sous une forme chimiquement liée, et, lorsque les composantes a) et c1) sont sous une forme chimiquement liée, cette forme correspondant au moins à un produit réactionnel répondant à l'une des formules:

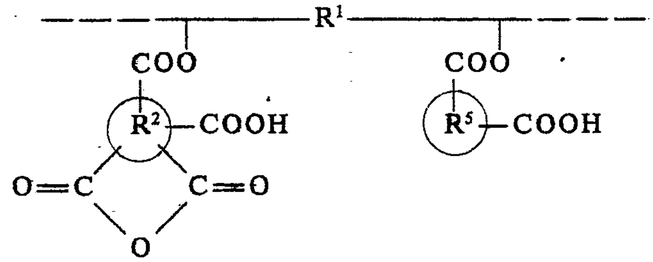

(I)

et

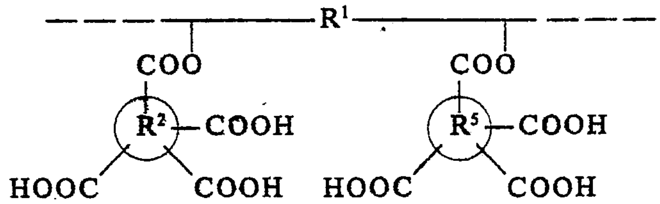

(Ia)

dans lesquelles:

$R^1$ représente le radical d'au moins un polymère contenant des radicaux —OH et appartenant à l'ensemble constitué par les polyesters, les polymères, tous deux avec un indice d'hydroxy de 20 à 300, et les résines phénoliques ayant un indice d'hydroxy de 100 à 800, et/ou le radical d'un composé époxydique,

$R^2$ représente le radical d'un acide au moins tétracarboxylique renfermant un radical —COOH en position ortho par rapport à la liaison ester,

$R^5$ représente le radical d'un acide carboxylique au moins dicarboxylique qui renferme un radical —COOH en position ortho relativement à la liaison ester, $R^5$ pouvant également avoir la même signification que $R^2$,

les radicaux anhydrides présents dans la formule (I) ou (Ia) pouvant être remplacés, au moins partiellement, par des radicaux —COOH et/ou des radicaux esters, et les radicaux —COOH au moins partiellement par des radicaux esters, et les radicaux —COOH libres se trouvant, en une proportion de plus de 20% et pouvant aller jusqu'à 100%, sous la forme d'un sel de la composante b).

2. Liant selon la revendication 1 caractérisé en ce qu'il est sous la forme d'une solution aqueuse.

3. Liant selon l'une des revendications 1 et 2 caractérisé en ce que les polymères qui forment le radical $R^1$ et qui sont des polyesters ou des produits de polymérisation ont un indice d'hydroxy de 40 à 220, et les résines phénoliques ont un indice d'hydroxy de 150 à 300.

4. Liant selon l'une quelconque des revendications 1 à 3 caractérisé en ce qu'il contient, en plus du produit réactionnel (I) ou (Ia), des parties n'ayant pars encore réagi d'au moins l'une des composantes a) à c2).

5. Liant selon l'une quelconque des revendications 1 à 4 caractérisé en ce qu'il contient, en plus du produit réactionnel (I) ou (Ia), au moins l'une des substances suivantes:

1) un acide polycarboxylique non lié à une chaîne de résine polymère ou de résine de condensation ni à un composé époxydique et renfermant un groupement répondant à l'une des formules

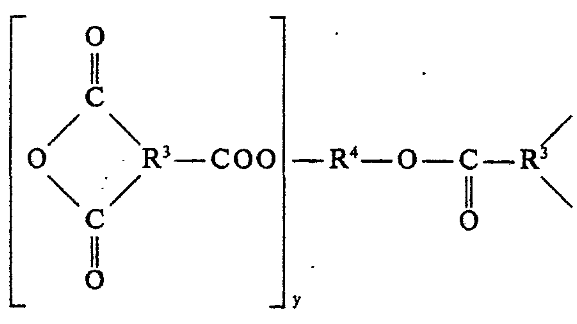

(II)

y = 1 à 4

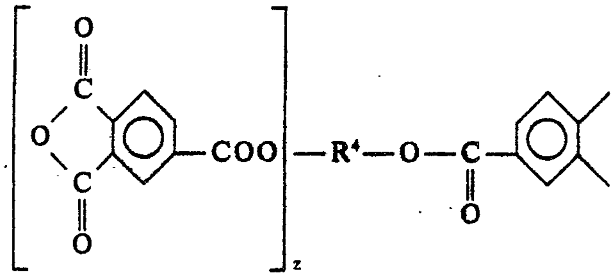

(IIa)

z = 1 ou 2

$R^2$ =

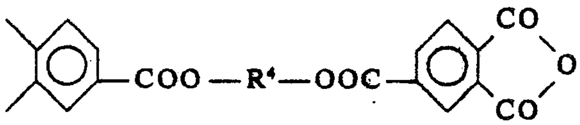

(IIb)

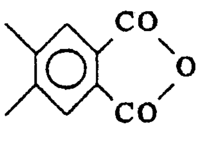

(III)

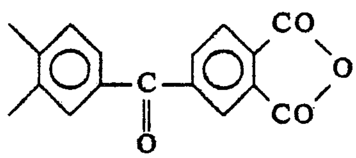

(IV)

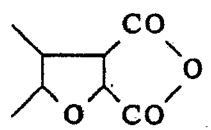

(V)

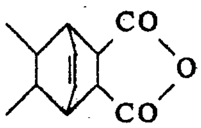

(Va)

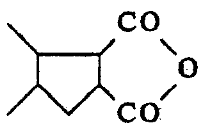

(Vb)

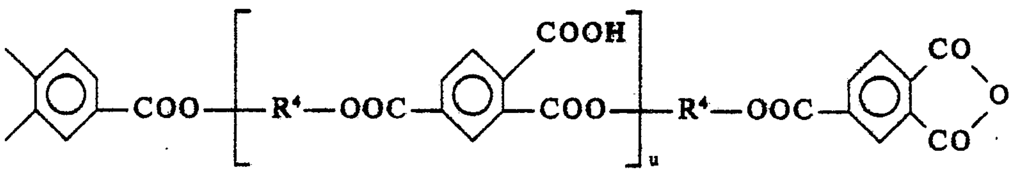

(VI)

u = 1 à 8

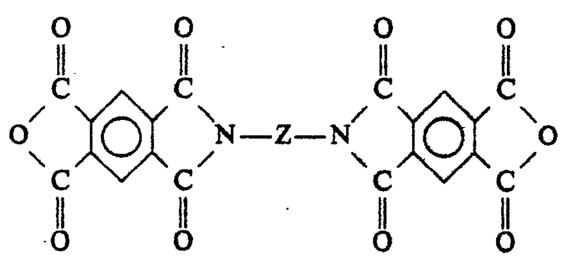

(VII)

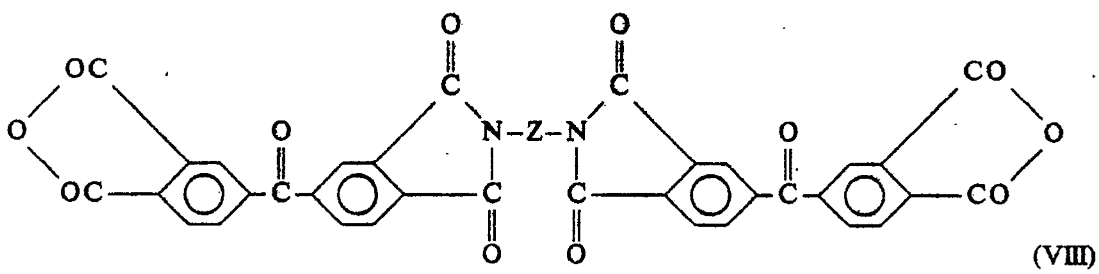

(VIII)

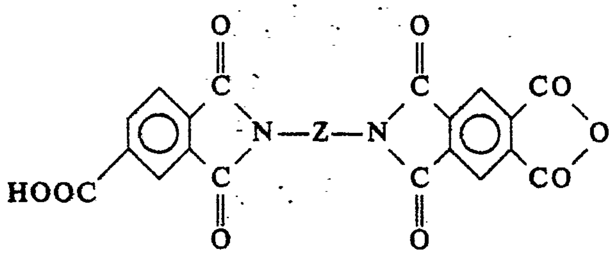

(IX)

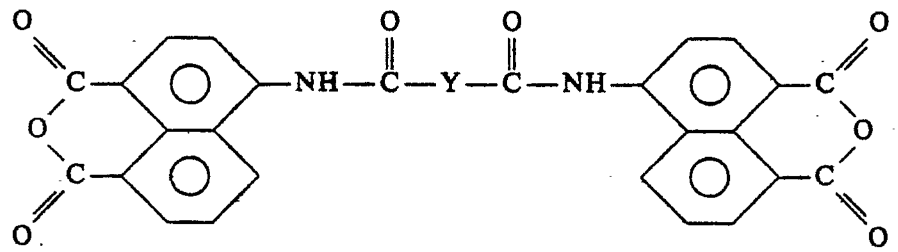

(XI)

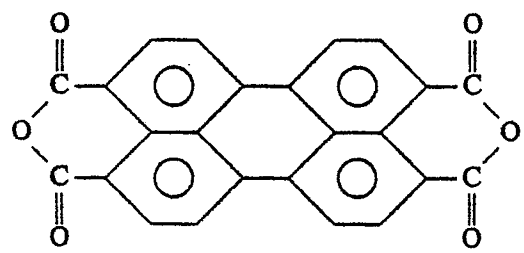

(XIII)

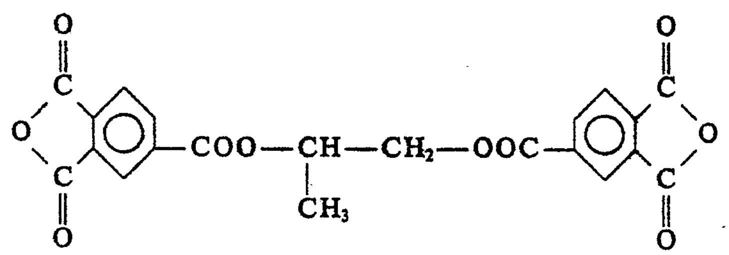

(XIV)

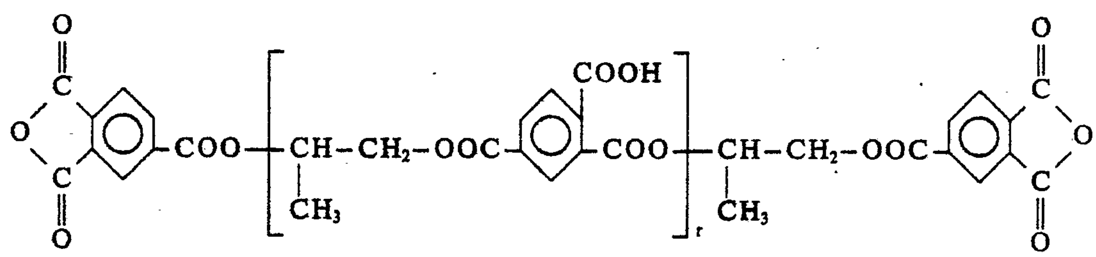

r = 1 à 8

(XV)

mais sous une forme au moins partiellement hydrolysée ou sous une forme salifiée, et/ou l'acide trimellitique;

2) une résine synthétique thermodurcissable appartenant à l'ensemble des résines de mélamine et des résines d'urée, chacune isolément ou en mélange, en une proportion pouvant aller jusqu'à 30% en poids, de préférence jusqu'à 15% en poids, par rapport à la quantité totale de matière solide;

3) un catalyseur en une proportion pouvant aller jusqu'à 5% en poids, de préférence comprise entre 0,01 et 0,5% en poids, par rapport à la quantité totale de matière solide;

4) une dispersion aqueuse d'une matière thermoplastique, éventuellement avec des adjuvants de dispersion;

dans la formule XI représentée ci-dessus, Y représente un radical $-(CH_2)_p-$ (où p est un nombre de 2 à 8) ou un radical de formule:

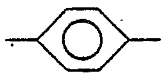 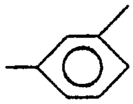 ou 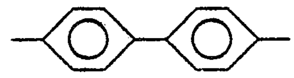 (XII)

et, dans les formules (VII) à (IX), Z représente un radical $-(CH_2)_m-$ (où m est un nombre de 2 à 8) ou l'un des radicaux suivants:

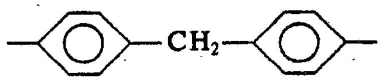 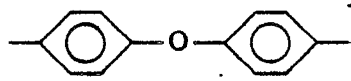

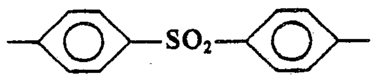 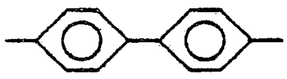 (X)

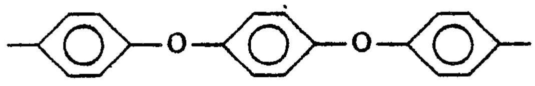

6. Procédé de préparation de liants selon l'une quelconque des revendications 1 à 5, procédé caractérisé en ce qu'on fait réagir en même temps ou successivement, et dans ce dernier cas dans l'ordre que l'on veut, en au moins une étape:

a) un dérivé d'acide polycarboxylique cyclique dépourvu d'halogène et
b) une substance capable de former des sels avec des radicaux —COOH et appartenant à l'ensemble constitué par les composés de métaux alcalins et de métaux alcalino-terreux, les composés du zinc ou de l'aluminium, les bases organiques et l'ammoniac, avec
c1) un polymère renfermant des radicaux —OH et pouvant former le radical $R^1$, et/ou
c2) un composé époxydique,

de manière à former des produits réactionnels de formule (I) ou (Ia), les radicaux anhydrides, si il y en a, étant hydrolysés dans une étape opératoire quelconque, au plus tard au cours de la formation du sel.

7. Application des liants selon l'une quelconque des revendications 1 à 5, ou des liants préparés par le procédé selon la revendication 6, à la fabrication de couches de revêtement.

8. Application selon la revendication 7 pour la fabrication de produits durcis à une température de 0 à 350° C, de préférence de 10 à 220° C.

9. Application des liants selon l'une quelconque des revendications 1 à 5 comme composante A), avec une dispersion aqueuse d'une résine de polymérisation supplémentaire B), pour des colles diluables à l'eau, application caractérisée en ce que ces colles contiennent, comme composante B) supplémentaire, au moins une résine de polymérisation B1) d'un élastomère éventuellement au moins partiellement modifié par des radicaux —COOH et/ou des radicaux sulfo, et/ou B2) d'un copolymère acrylique, la proportion du liant réactif A) étant de 5 à 40% en poids et celle de la composante B) de 60 à 95% en poids, à chaque fois par rapport à la quantité totale de matière solide.

10. Application selon la revendication 9, caractérisé en ce que la composante B1) est constituée, pour une part prépondérante, d'un polymère de chloro-butadiène éventuellement modifié, au moins partiellement, par des radicaux —COOH, et la composante B2) est essentiellement constituée d'un copolymère acrylique, en ce que le radical $R^1$, dans la formule (I) ou (Ia), est le reste d'un polyester ramifié à base d'au moins un acide dicarboxylique, d'au moins un diol aliphatique et d'au moins un triol, en ce que les radicaux —COOH libres portés par les radicaux $R^2$ et/ou $R^5$ sont estérifiés partiellement par un polyol, et les radicaux anhydrides ou —COOH restants sont sous la forme de sels d'ammoniums quaternaires, et en ce que le composé époxydique c2) est sous la forme d'un ester d'acide gras époxydé.